(19) **Europäisches Patentamt European Patent Office Office européen des brevets**

(11) **EP 4 697 075 A1**

(12) **EUROPEAN PATENT APPLICATION**

(43) Date of publication:
**18.02.2026 Bulletin 2026/08**

(21) Application number: **25193710.8**

(22) Date of filing: **04.08.2025**

(51) International Patent Classification (IPC):
**G02B 17/00** (2006.01)    **G02B 15/14** (2006.01)

(52) Cooperative Patent Classification (CPC):
**G02B 15/1425; G02B 15/1435; G02B 15/143507; G02B 17/004**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **16.08.2024 JP 2024137041**

(71) Applicant: **Canon Kabushiki Kaisha Tokyo, 146-8501 (JP)**

(72) Inventor: **KOBAYASHI, Yuma Tokyo (JP)**

(74) Representative: **WESER & Kollegen Patentanwälte PartmbB Radeckestraße 43 81245 München (DE)**

(54) **IMAGING OPTICAL SYSTEM AND IMAGE PICKUP APPARATUS HAVING THE SAME**

(57)    An imaging optical system includes a plurality of lens units. Each distance between adjacent lens units among the plurality of lens units changes during zooming. The plurality of lens units include a first lens unit (L1) with negative refractive power and a second lens unit (L2) with positive refractive power disposed closer to an image plane than the first lens unit, and a first transmissive reflective surface (HM1) and a second transmissive reflective surface (HM2) disposed closer to the image plane than the first transmissive reflective surface.

FIG. 3

EP 4 697 075 A1

**Description**

TECHNICAL FIELD

The aspect of the disclosure relates to one or more embodiments of an imaging optical system and an image pickup apparatus having the same.

BACKGROUND

Imaging optical systems for image pickup apparatuses and the like are demanded to have a reduced size.

SUMMARY

The disclosure in its first aspect provides an imaging optical system as specified in claims 1 to 18.
The disclosure in its second aspect provides an image pickup apparatus as specified in claim 19.
Features of the present disclosure will become apparent from the following description of embodiments with reference to the attached drawings. The following description of embodiments is described by way of example.

BRIEF DESCRIPTION OF THE DRAWINGS

Fig. 1 is a schematic diagram illustrating an optical path in the optical system.
Fig. 2 is a schematic diagram illustrating an optical path in the optical system.
Fig. 3 is a sectional view of an imaging optical system according to Example 1 at a wide-angle end.
Figs. 4A and 4B are aberration diagrams of the imaging optical system according to Example 1 in an in-focus state at infinity.
Fig. 5 is a sectional view of an imaging optical system according to Example 2 at a wide-angle end.
Figs. 6A and 6B are aberration diagrams of the imaging optical system according to Example 2 in an in-focus state at infinity.
Fig. 7 is a sectional view of an imaging optical system according to Example 3 at a wide-angle end.
Figs. 8A and 8B are aberration diagrams of the imaging optical system according to Example 3 in an in-focus state at infinity.
Fig. 9 is a sectional view of an imaging optical system according to Example 4 at a wide-angle end.
Figs. 10A and 10B are aberration diagrams of the imaging optical system according to Example 4 in an in-focus state at infinity.
Fig. 11 is a sectional view of an imaging optical system according to Example 5 at a wide-angle end.
Figs. 12A and 12B are aberration diagrams of the imaging optical system according to Example 5 in an in-focus state at infinity.
Fig. 13 is a sectional view of an imaging optical system according to Example 6 at a wide-angle end.
Figs. 14A and 14B are aberration diagrams of the imaging optical system according to Example 6 in an in-focus state at infinity.
Fig. 15 is a sectional view of an imaging optical system according to Example 7 at a wide-angle end.
Figs. 16A and 16B are aberration diagrams of the imaging optical system according to Example 7 in an in-focus state at infinity.
Fig. 17 is a sectional view of an imaging optical system according to Example 8 at a wide-angle end.
Figs. 18A and 18B are aberration diagrams of the imaging optical system according to Example 8 in an in-focus state at infinity.
Fig. 19 is a sectional view of an imaging optical system according to Example 9 at a wide-angle end.
Figs. 20A and 20B are aberration diagrams of the imaging optical system according to Example 9 in an in-focus state at infinity.
Fig. 21 is a sectional view of an imaging optical system according to Example 10 at a wide-angle end.
Figs. 22A and 22B are aberration diagrams of the imaging optical system according to Example 10 in an in-focus state at infinity.
Fig. 23 is a sectional view of an imaging optical system according to Example 11 at a wide-angle end.
Figs. 24A and 24B are aberration diagrams of the imaging optical system according to Example 11 in an in-focus state at infinity.
Fig. 25 is a sectional view of an imaging optical system according to Example 12 at a wide-angle end.

Figs. 26A and 26B are aberration diagrams of the imaging optical system according to Example 12 in an in-focus state at infinity.

Fig. 27 is a sectional view of an imaging optical system according to Example 13 at a wide-angle end.

Figs. 28A and 28B are aberration diagrams of the imaging optical system according to Example 13 in an in-focus state at infinity.

Fig. 29 is a sectional view of an imaging optical system according to Example 14 at a wide-angle end.

Figs. 30A and 30B are aberration diagrams of the imaging optical system according to Example 14 in an in-focus state at infinity.

Fig. 31 is a sectional view of an imaging optical system according to Example 15 at a wide-angle end.

Figs. 32A and 32B are aberration diagrams of the imaging optical system according to Example 15 in an in-focus state at infinity.

Fig. 33 is a sectional view of an imaging optical system according to Example 16 at a wide-angle end.

Figs. 34A and 34B are aberration diagrams of the imaging optical system according to Example 16 in an in-focus state at infinity.

Fig. 35 is a schematic diagram of the image pickup apparatus.

DESCRIPTION OF THE EMBODIMENTS

Referring now to the accompanying drawings, a detailed description will be given according to Examples according to the disclosure. Corresponding elements in respective figures will be designated by the same reference numerals, and a duplicate description thereof will be omitted.

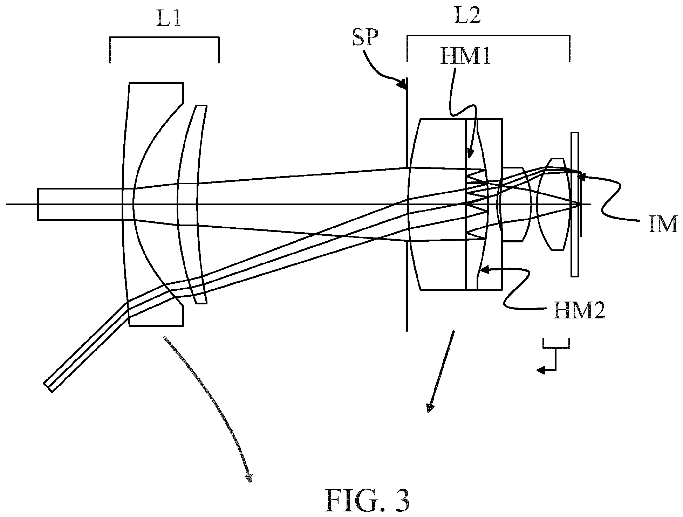

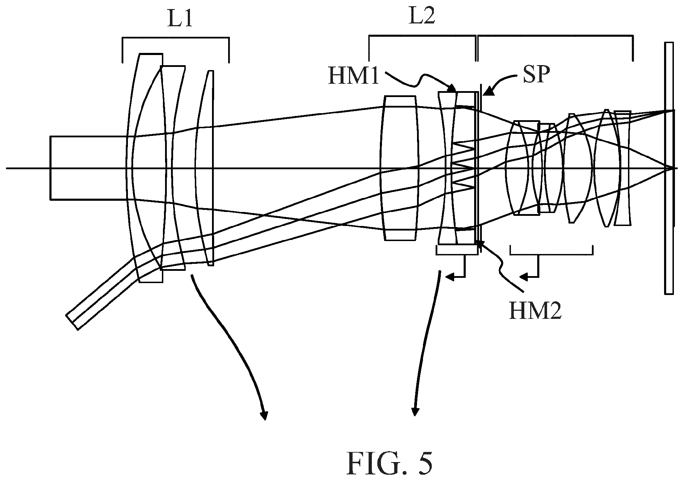

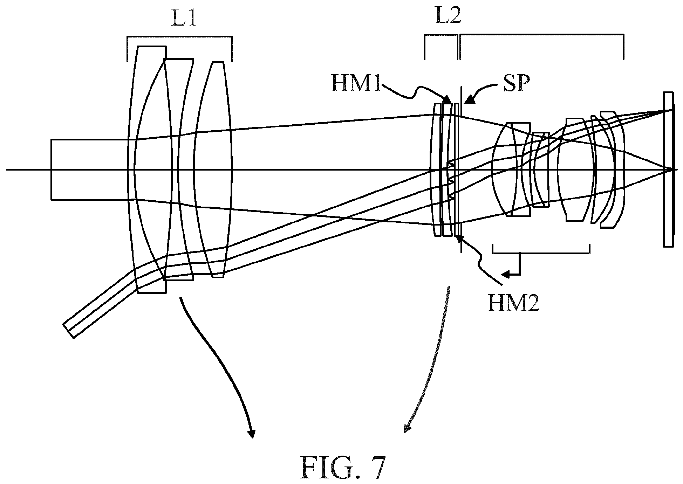

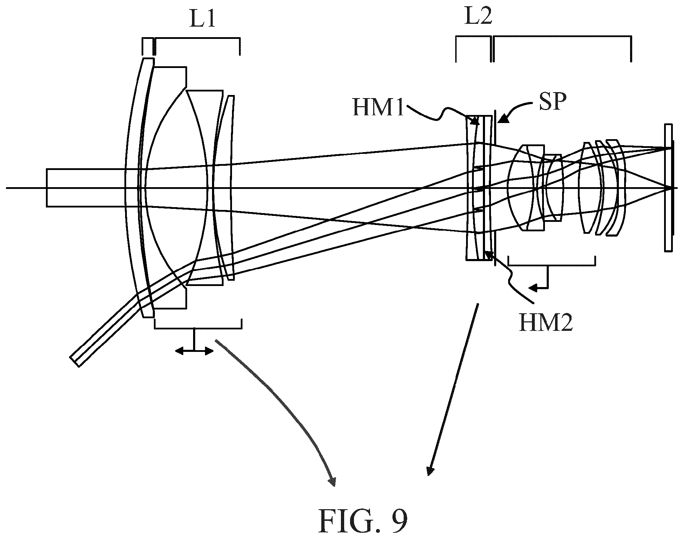

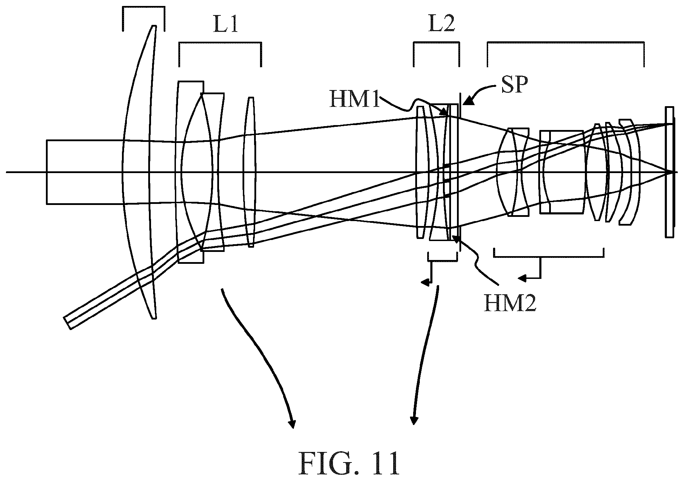

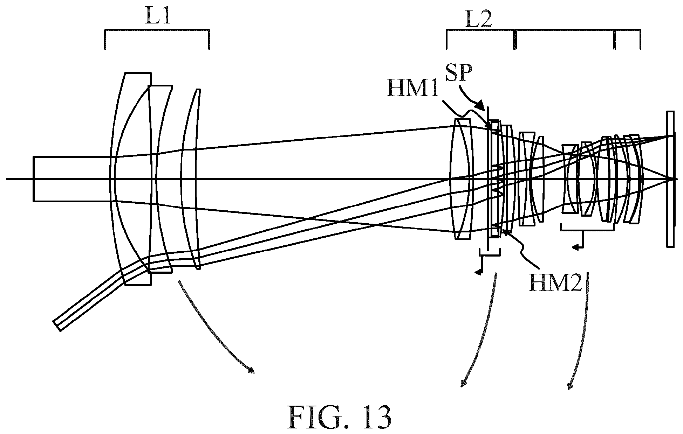

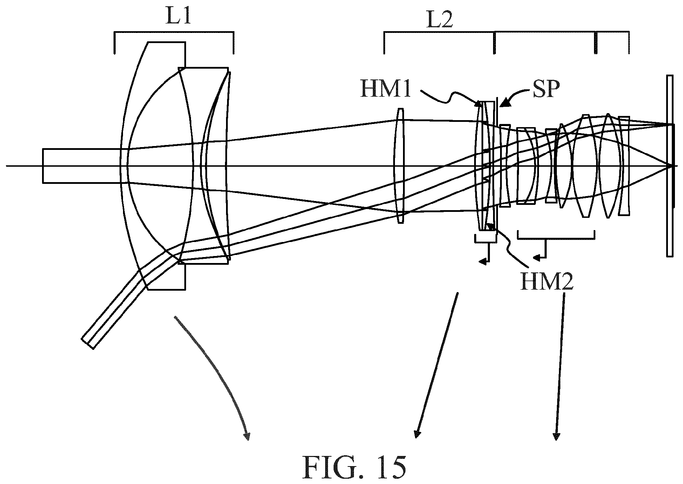

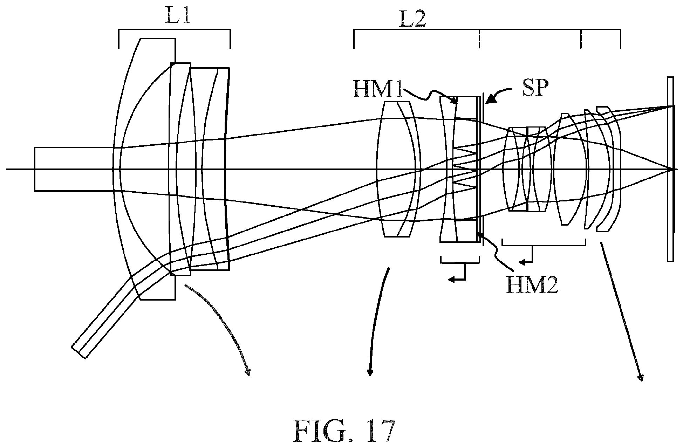

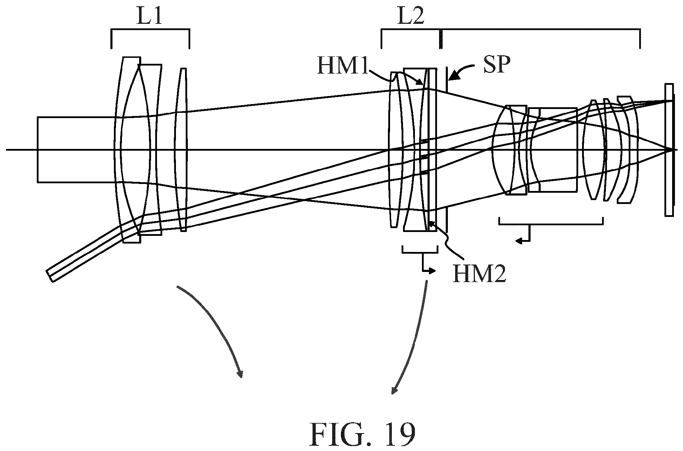

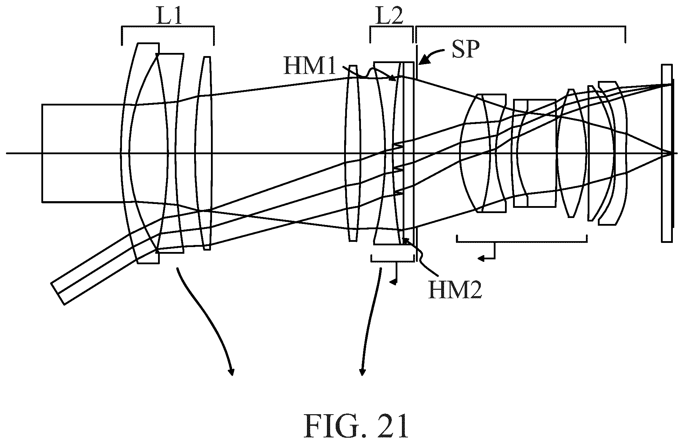

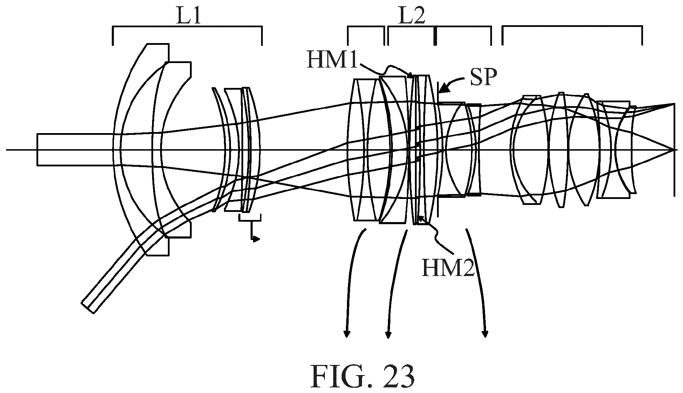

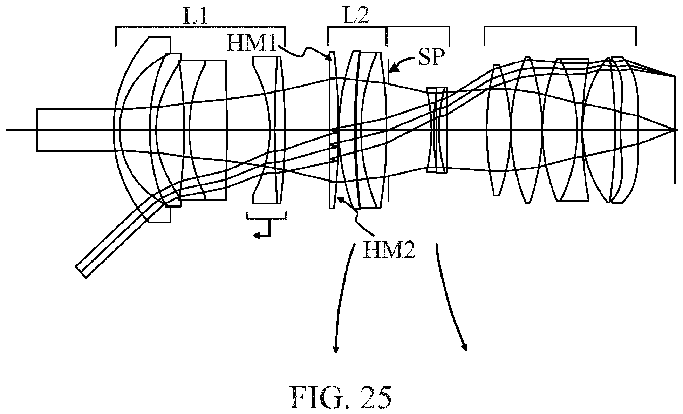

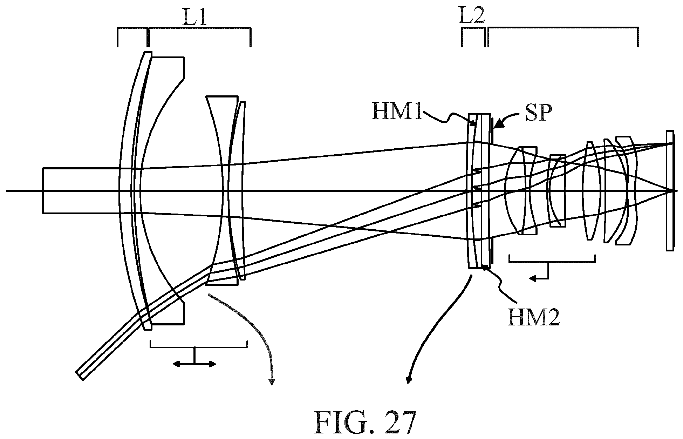

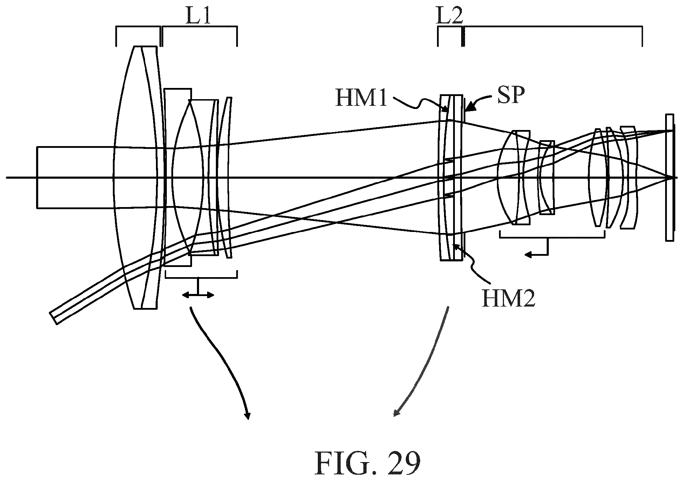

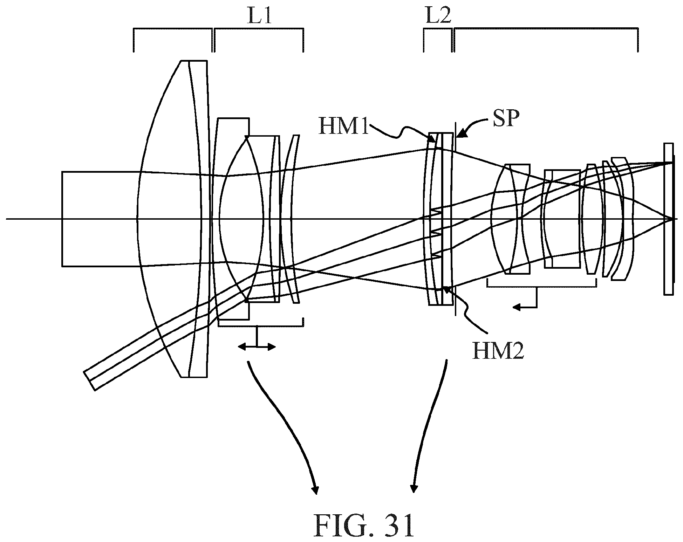

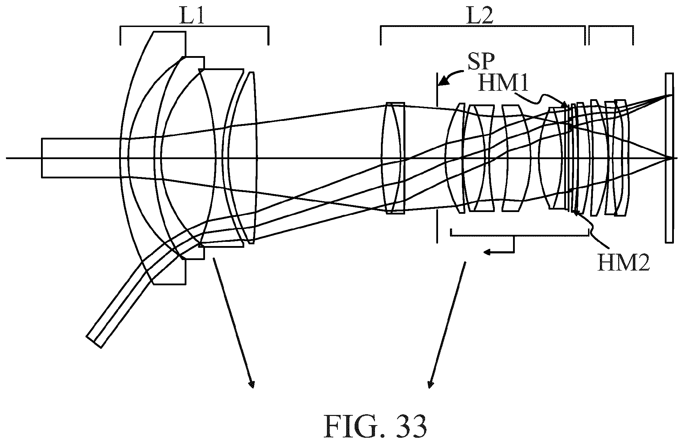

Figs. 3, 5, 7, 9, 11, 13, 15, 17, 19, 21, 23, 25, 27, 29, 31, and 33 are sectional views at a wide-angle end of the imaging optical systems according to Examples 1 to 16, respectively. The imaging optical systems according to the respective examples are used for image pickup apparatuses such as digital video cameras, digital still cameras, broadcasting cameras, film-based cameras, and surveillance cameras.

In each sectional view, a left side is an object side, and a right side is an image side. The imaging optical systems according to the respective examples may be used as a projection lens for a projector (projection apparatus) and the like. In this case, a left side is a screen side, and a right side is a projected image side.

The imaging optical systems according to the respective examples have a plurality of lens units. In this specification, a lens unit is a group of lenses that move or stand still as a unit during zooming. That is, in the imaging optical systems according to the respective examples, each distance between adjacent lens units changes during zooming. The lens unit may include one lens or multiple lenses. The lens unit may include an aperture stop.

The plurality of lens units include a first lens unit L1 with negative refractive power and a second lens unit L2 with positive refractive power, arranged in this order from the object side to the image side.

SP represents an aperture stop. IM represents an image plane. In a case where the imaging optical system according to each example is used for a digital still camera or digital video camera, an imaging surface of a solid-state image sensor (photoelectric conversion element) such as a CCD sensor or CMOS sensor is disposed on the image plane IM. In a case where the imaging optical system according to each example is used as an imaging optical system of a film-based camera, a photosensitive surface equivalent to a film surface is disposed on the image plane IM.

A solid arrow illustrated below in each sectional view represents a moving trajectory of each lens unit during zooming from the wide-angle end to the telephoto end. An arrow in an optical axis direction indicates a moving direction of the lens unit during focusing.

The thicknesses of a waveplate (phase shifter), polarization selective transmissive reflective element, and polarizer described below are omitted. This is because they are sufficiently thin and flat (or have a meniscus shape with nearly identical shapes on the front and back), and therefore their thicknesses do not affect the essence of the ray tracing optical design of the disclosure. In other words, even if they are inserted in the form of a thin flat plate or the like taking their thickness into consideration, it is possible to easily design an imaging optical system with roughly equivalent aberrations and size by minutely adjusting a radius of curvature and thickness of each lens.

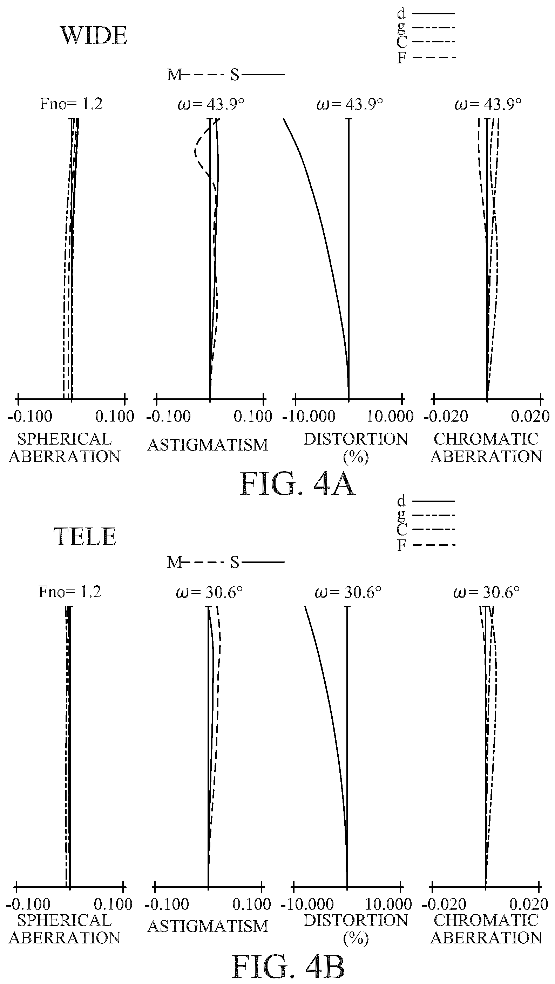

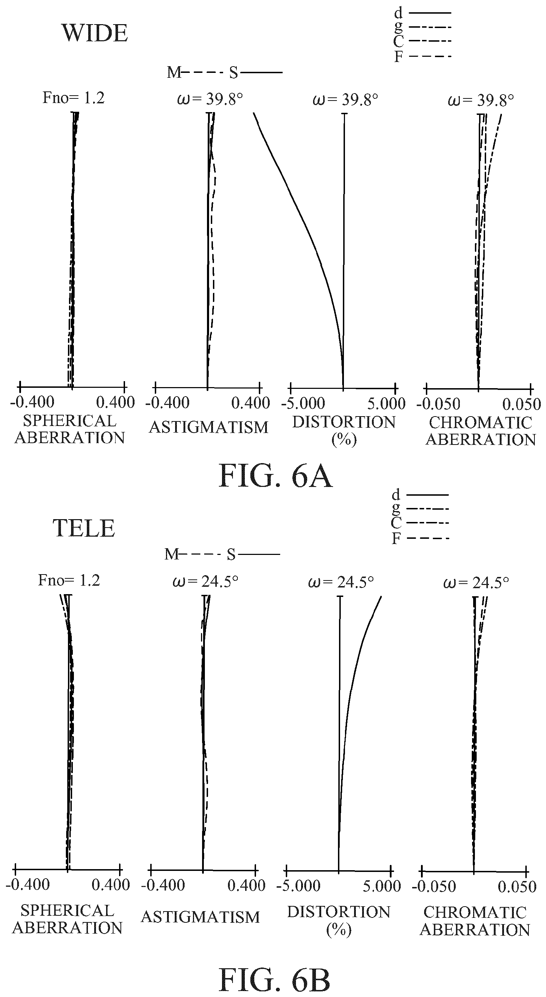

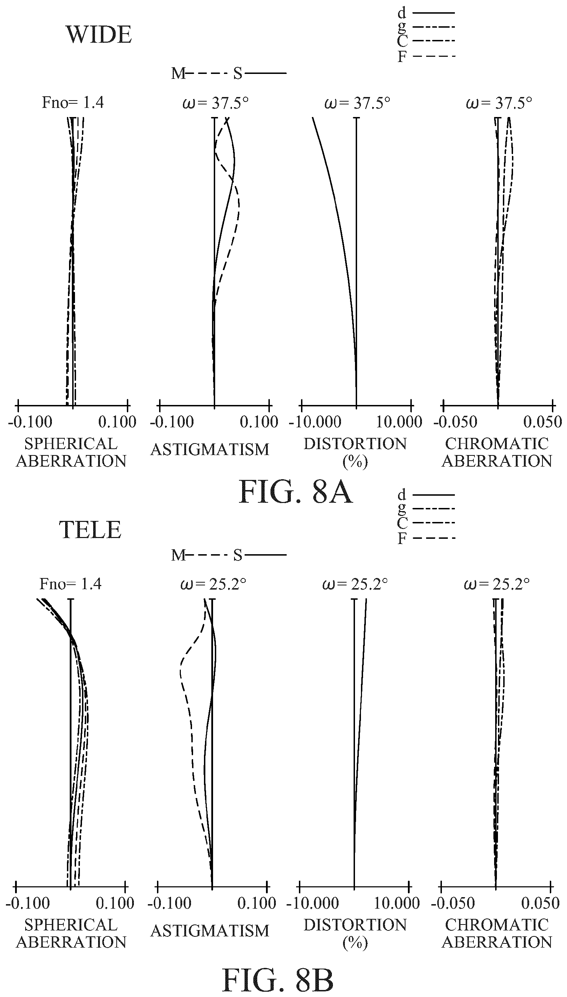

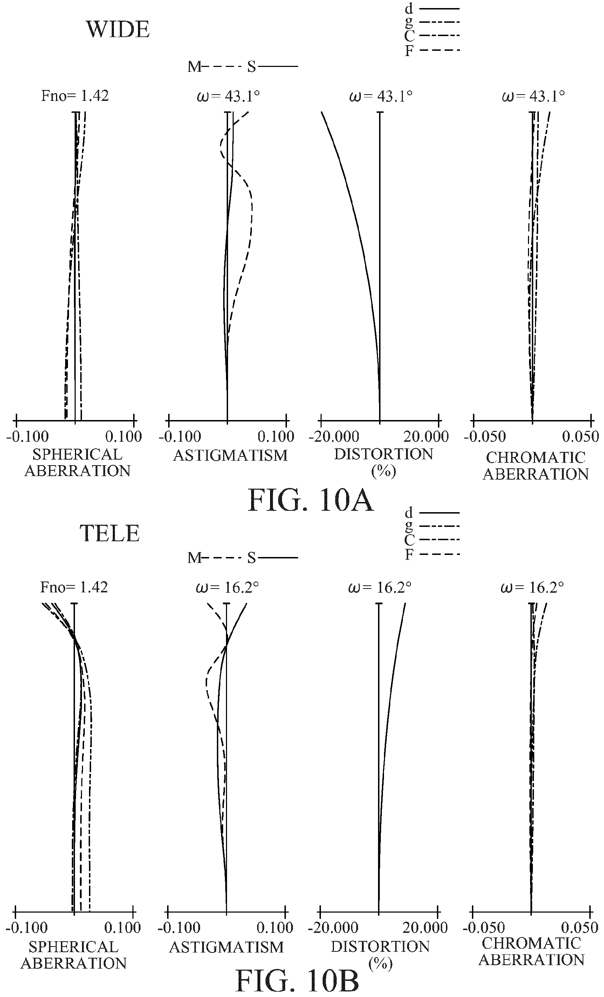

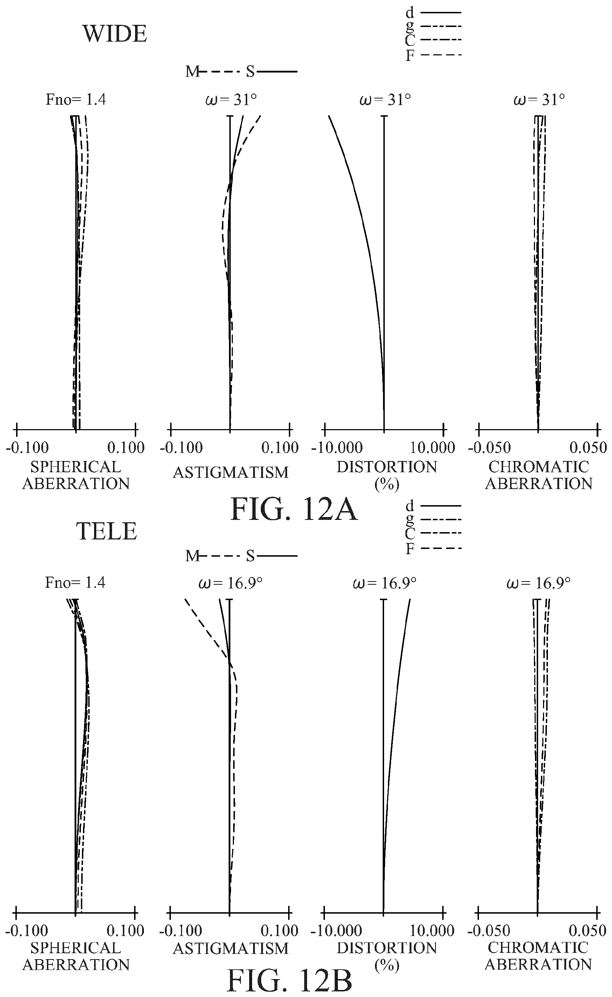

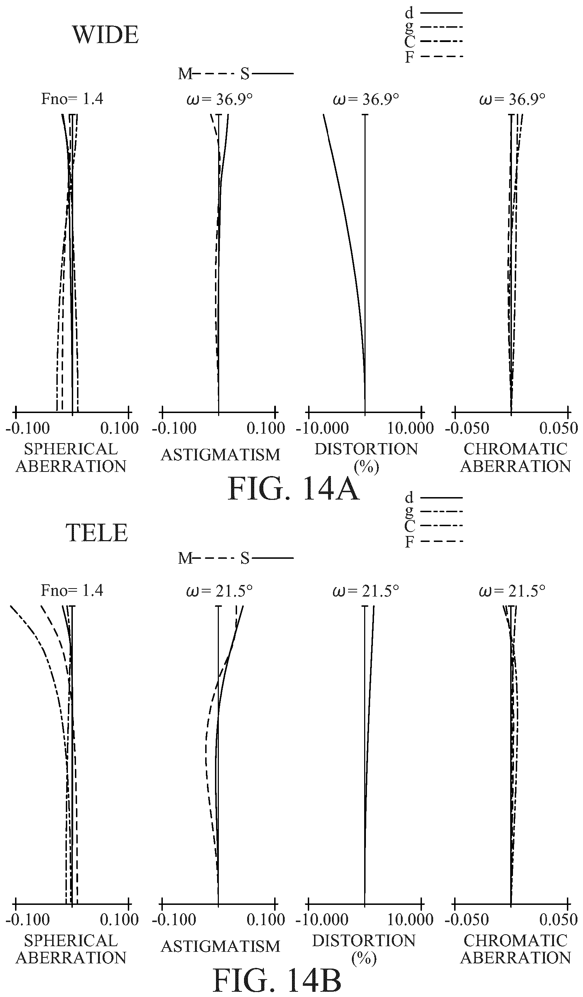

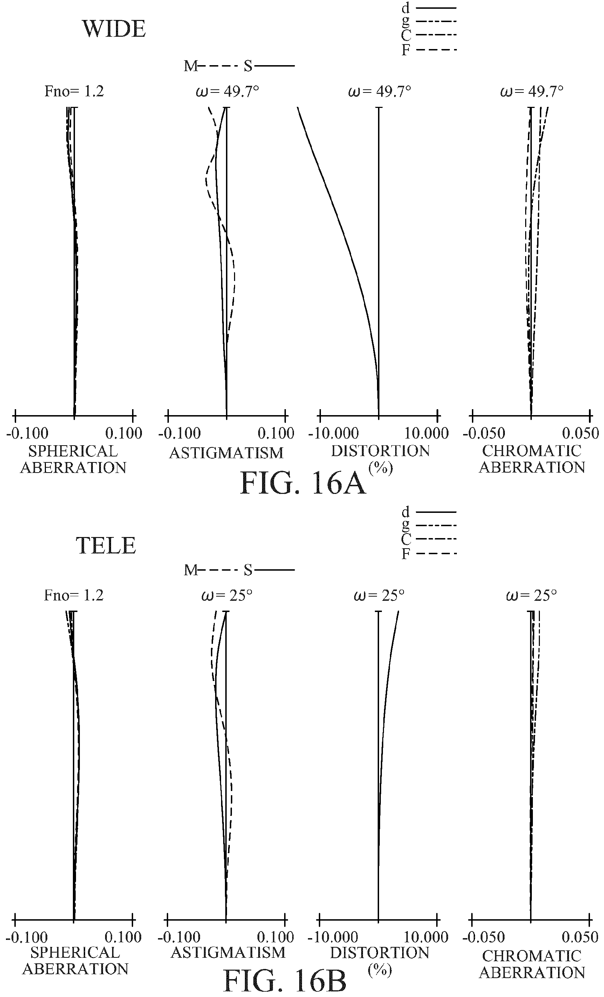

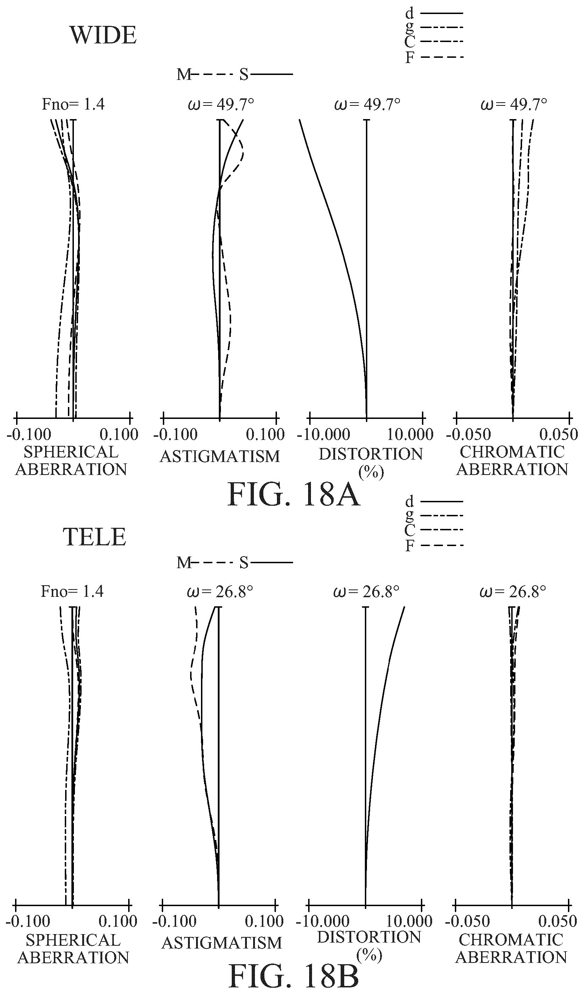

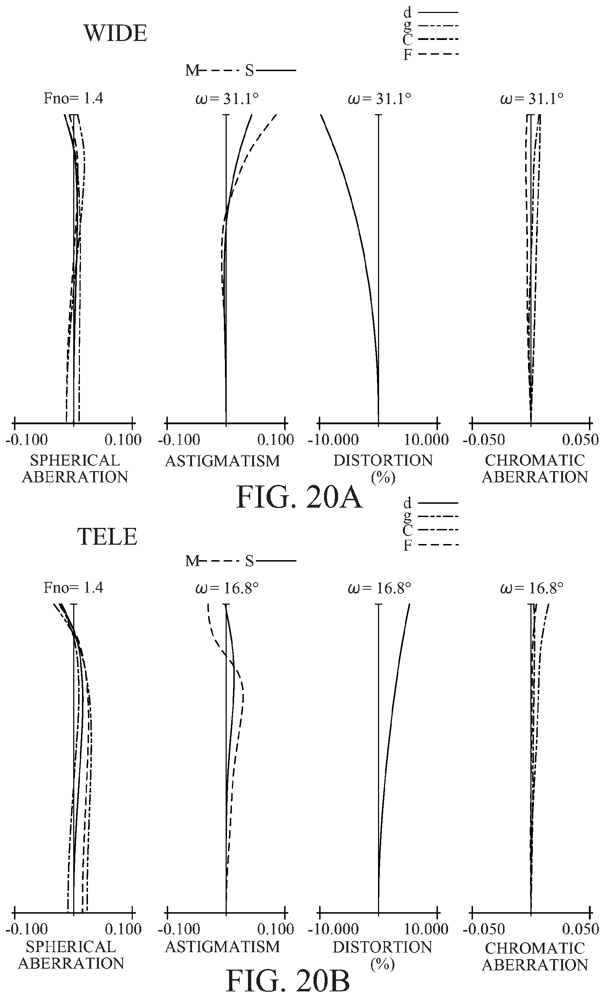

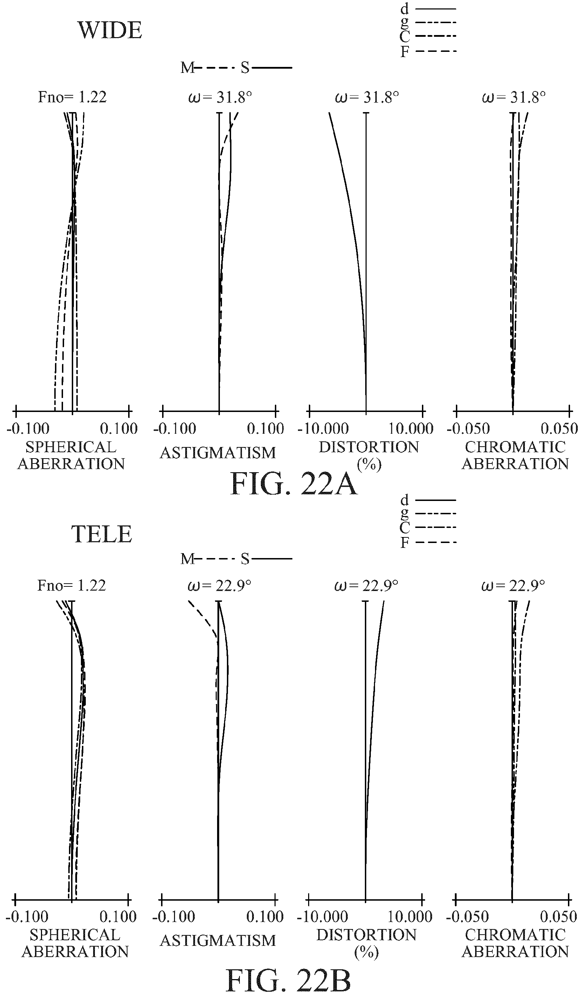

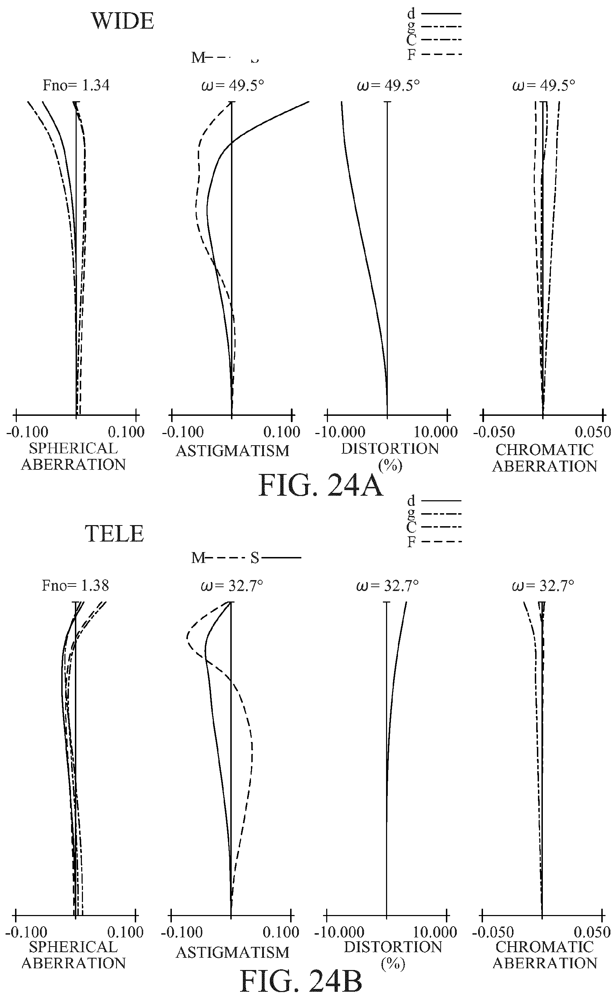

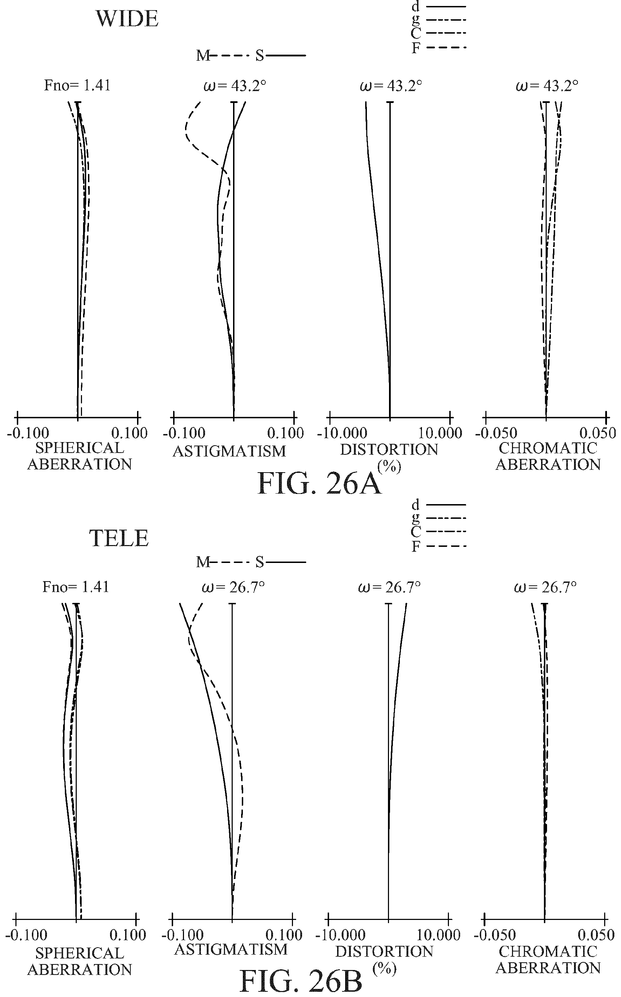

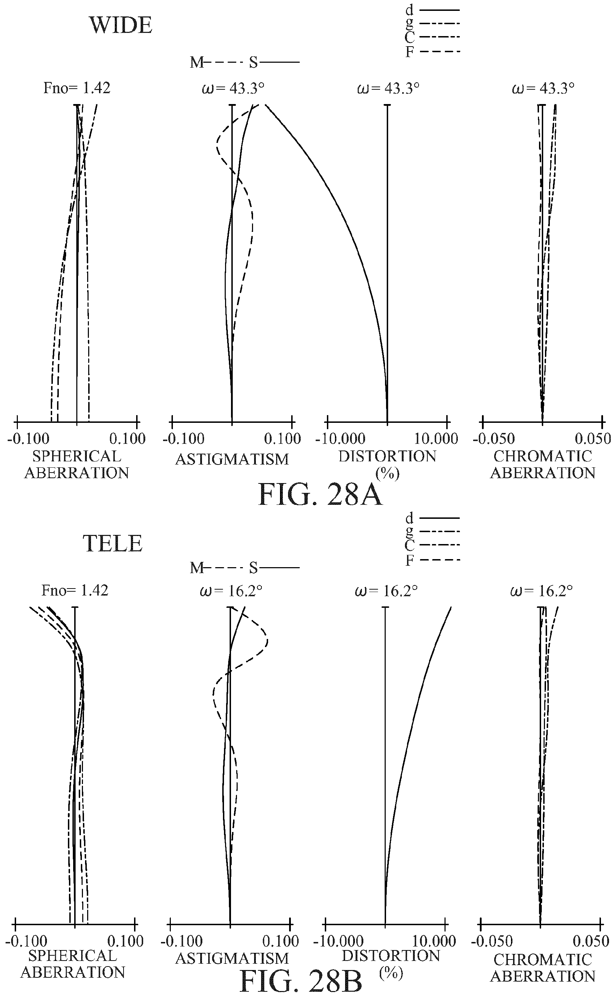

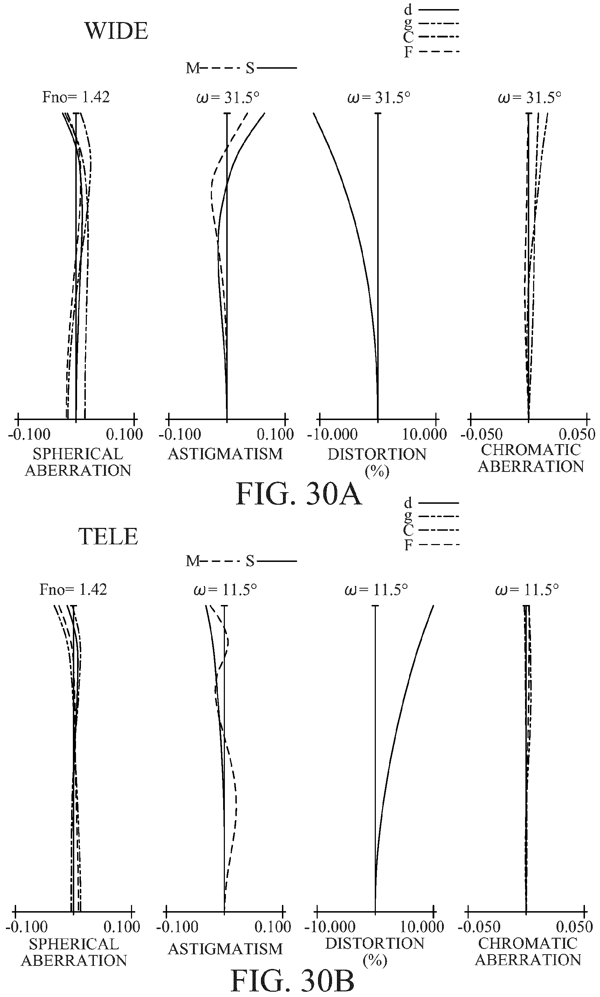

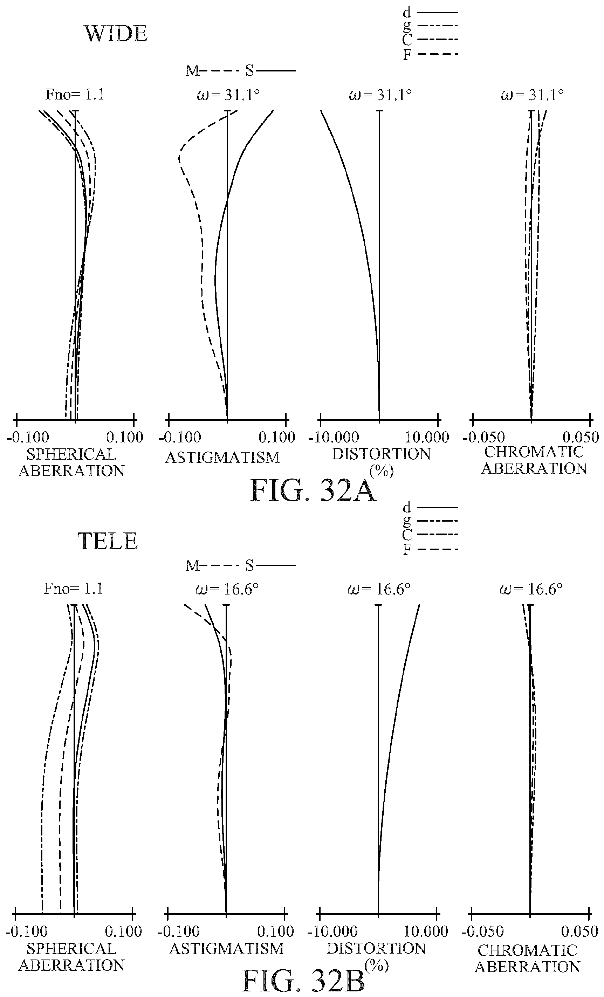

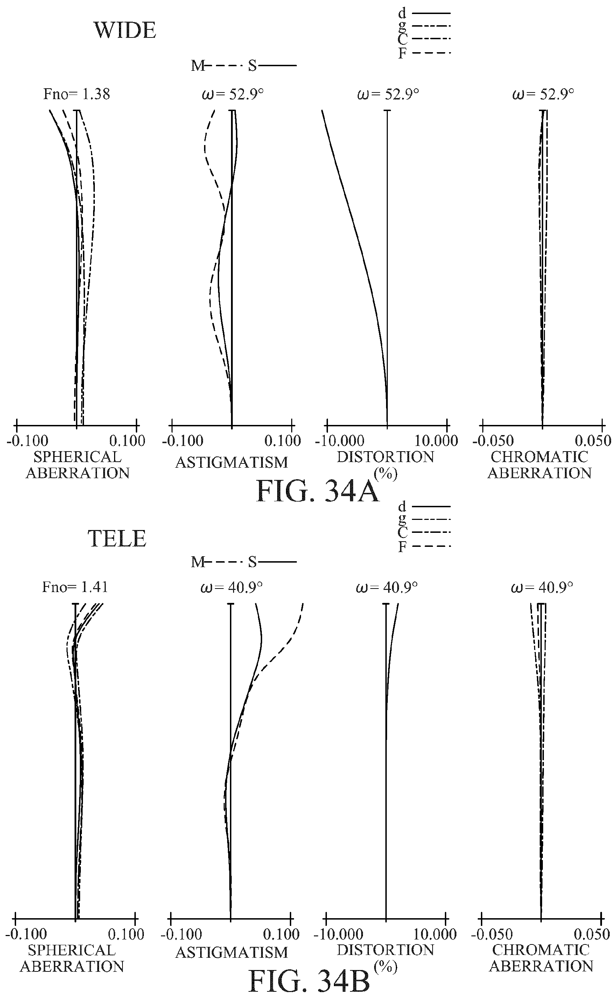

Figs. 4A, 4B, 6A, 6B, 8A, 8B, 10A, 10B, 12A, 12B, 14A, 14B, 16A, 16B, 18A, 18B, 20A, 20B, 22A, 22B, 24A, 24B, 26A, 26B, 28A, 28B, 30A, 30B, 32A, 32B, 34A, and 34B are aberration diagrams in an in-focus state (on an object) at infinity of the imaging optical systems according to Examples 1 to 16, respectively. Figs. 4A, 6A, 8A, 10A, 12A, 14A, 16A, 18A, 20A, 22A, 24A, 26A, 28A, 30A, 32A, and 34A illustrate aberration diagrams at a wide-angle end. Figs. 4B, 6B, 8B, 10B, 12B, 14B, 16B, 18B, 20B, 22B, 24B, 26B, 28B, 30B, 32B, and 34B illustrate aberration diagrams at a telephoto end, respectively.

In a spherical aberration diagram, Fno represents an F-number. The spherical aberration diagram illustrates spherical aberration amounts for the d-line (with a wavelength of 587.6 nm), F-line (with a wavelength of 486.1 nm), C-line (with a wavelength of 656.3 nm), and g-line (with a wavelength of 435.8 nm). In an astigmatism diagram, S illustrates an astigmatism amount on a sagittal image plane, and M illustrates an astigmatism amount on a meridional image plane. A distortion diagram illustrates a distortion amount for the d-line. A chromatic aberration diagram illustrates a chromatic aberration amount for the g-line. ω is an imaging half angle of view (°).

Next follows a description of the characteristic configuration of the imaging optical system according to each example.

The imaging optical system according to each example is a magnification-varying optical system that can perform imaging by forming an object image on an image plane and obtaining the image by placing a solid image sensor, photosensitive film, etc. on the image plane.

As described above, the imaging optical system according to each example includes a plurality of lens units, which include a first lens unit L1 with negative refractive power and a second lens unit L2 with positive refractive power, arranged in order from the object side to the image side. The imaging optical system according to each example has a first transmissive reflective surface HM1 and a second transmissive reflective surface HM2, arranged in order from the object side to the image side. Light incident from the object side transmits through the first transmissive reflective surface HM1 and is reflected by the second transmissive reflective surface HM2. The light is then reflected by the first transmissive reflective surface HM1, transmits through the second transmissive reflective surface HM2, and enters an imaging unit such as a solid-state image sensor or a photosensitive film.

The first transmissive reflective surface HM1 and the second transmissive reflective surface HM2 may be provided to the first lens unit L1 or in the second lens unit L2. The first transmissive reflective surface HM1 may be provided to the first lens unit L1, and the second transmissive reflective surface HM2 may be provided in the second lens unit L2. The first transmissive reflective surface HM1 and the second transmissive reflective surface HM2 may be provided to one or more lens units different from the first lens unit L1 and the second lens unit L2.

In this specification, the terms "magnification-varying optical system" and "zoom lens" have the same meaning. Strictly speaking, a zoom lens refers to an optical system that does not shift the focus during magnification variation, but here, the term "zoom lens" or "magnification variation optical system" also includes optical systems that shift the focus.

The first transmissive reflective surface HM1 and the second transmissive reflective surface may not have a transmittance of 50% and a reflectance of 50%. The ratio of the transmittance to the reflectance for randomly polarized light may be in a range of 1:3 to 3:1. Randomly polarized light is light with Stokes parameters S0=1, S1=S2=S3=0. The first transmissive reflective surface HM1 and the second transmissive reflective surface HM2 may absorb light.

A lens may be formed or cemented with at least one side of the two transmissive reflective surfaces.

Due to the above configuration, the imaging optical system according to each example can reduce the size and achieve high optical performance.

Next follows a description of a configuration that may be satisfied in the imaging optical system according to each example. An element (wavelength or phase shifter) for imparting a phase difference (retardation) to incident light may be disposed between the first transmissive reflective surface HM1 and the second transmissive reflective surface HM2. For example, a wavelength plate (phase plate) such as a quarter waveplate (QWP) or a 45° optical rotator (Faraday rotator, etc.) can be used as the phase shifter.

For example, a polymer film having birefringence or a liquid crystal alignment layer can be used as the QWP. A laminate formed by stacking such a polymer film and liquid crystal alignment layer can also be used as the QWP. For example, "WA-140T" by Nippon Kayaku Co., Ltd. and "Polar Correct" by Colorlink Japan Co., Ltd. can be used. In addition to the above, inorganic wavelength plates by Dexerials Corporation can also be used as the QWP. Wavelength plates in which atoms or molecules are oriented by polarized light irradiation or the like to exhibit birefringence can also be used. By using such a method, wavelength plates with higher surface accuracy can be prepared more easily than polymer films.

The QWP can be disposed by cementing it with, for example, the first transmissive reflective surface HM1 or the second transmissive reflective surface HM2. The QWP can also be disposed as a separate member from these transmissive reflective surfaces. For example, the film may be inserted directly into the optical path, or the film cemented with a glass plate may be inserted into the optical path. A lens can also be formed or cemented on at least one side of the QWP. For example, an inorganic wavelength plate can be used as a substrate and a lens can be molded on one or both sides of the inorganic wavelength plate using wafer level optics techniques.

The second lens unit L2 may have a first transmissive reflective surface (HM1) and a second transmissive reflective surface (HM2). In the imaging optical system according to each example, the light diverged by the first lens unit L1 with negative refractive power enters the second lens unit L2. Thus, the light enters the second lens unit L2 at a relatively high light ray height. Thus, by placing a reflective surface that does not cause chromatic aberration in principle at a position with a high light ray height, the chromatic aberration of the imaging optical system can be effectively corrected. In particular, in an optical system with a small F-number that requires strict correction of longitudinal chromatic aberration, the chromatic aberration correction by this reflective surface is particularly effective. In addition, from the viewpoint of Petzval sum correction, the lens unit with positive refractive power may have a reflective surface, and in this respect, the second lens unit L2 may have a reflective surface. Since imaging optical systems generally have a positive focal length, the positive refractive power of each lens in the imaging optical system inevitably becomes strong, and the Petzval sum in the refractive system tends to become positive. In order to correct this, it is necessary to place a powerful negative lens, but the negative lens has a significant adverse effect on other aberrations such as sagittal coma, which is particularly noticeable in lenses with small F-numbers. On the other hand, the Petzval sum of the reflective surface is opposite to that of the refractive lens, and a reflective surface with positive refractive power has a negative Petzval sum, so that the positive Petzval sum generated in a refractive lens with positive refractive power can be offset by the reflective surface with positive refractive power. Thus, at least one of the two reflective surfaces may have positive refractive power. In a case where the sum of the refractive powers of the two reflective surfaces is positive or one of them has negative refractive power, the reflective surface with positive refractive power may have a high light ray height. Thus, it may be natural in terms of optical arrangement to place the reflective surface in a subgroup with positive refractive power, and the reflective surface may be provided to the second lens unit L2.

As mentioned above, the reflective surface is very important in terms of aberration correction, so the reflective surface may be moved during zooming. Thereby, aberrations may be particularly effectively corrected over the entire zoom range while the weight of the focus unit is maintained small.

In the imaging optical system according to each example, a plurality of multiple lens units may consist of the first lens unit L1 and the second lens unit L2. However, in a case where the refractive power of each lens unit and a distance between the lens units are determined, a moving amount is also determined, and there is little freedom in the arrangement of each lens unit, it becomes difficult to achieve high magnification, especially while the F-number is bright. Accordingly, the third lens unit may be closer to the image plane than the second lens unit L2. Thereby, the freedom in the configuration of each lens unit can be improved and the high magnification can be achieved or high image quality while magnification is maintained. The third lens unit may not move during zooming or the moving amount of the third lens may be smaller than that of the second lens unit L2. Particularly in interchangeable lens applications, it is necessary to provide a large space for mechanical and electronic components near the lens mount, which is a joint portion with the camera body. By fixing the lens unit closest to the image plane or maintaining a moving amount small, the space for mechanical and electronic components near the lens mount is not compressed by the mechanism for moving the lens units, and a lens with a larger diameter can be disposed near the image plane. Thereby, an incident angle of an off-axis light ray onto the sensor can be close to telecentricity.

The imaging optical system according to each example may be a coaxial system. Thereby, the ease of manufacturing of each component improves and the assembly and adjustment processing can be easier. However, the effective diameter and outer diameter of the lens and transmissive reflective surface do not need to be rotationally symmetrical and, for example, a rectangular shape with a notch or orientation flat indicating the orientation of a variety of polarizing elements may be used.

The imaging optical system according to each example may be a primary imaging system. In a case where the imaging optical system according to each example is a high-order imaging system of second or higher order that forms an intermediate image, it is necessary to re-image the light rays that have been imaged once, and the overall length increases.

During focusing, at least one of lenses disposed closer to the image plane than the first transmissive reflective surface HM1, the second transmissive reflective surface HM2, and the aperture stop SP may be moved along the optical axis. A common focusing method for the zoom lens is to move the lens unit disposed closest to the object (or a part of the lenses). In this method, an extension amount does not change during zooming, so parfocality can be easily secured without using a special mechanical mechanism or electronic control. However, in general, in a zoom lens having a large aperture diameter, a light ray height of a lens disposed on the object side is higher than that of the lens disposed the image side. In a case where the lens disposed on the object side is moved significantly during focusing, a large aberration variation occurs because the lens is moved at a position where the light ray height is high. In particular, in a zoom lens having a large aperture diameter such as the imaging optical system according to each example, the aberration fluctuation is at an unacceptable level. Therefore, the lens disposed on the image side where the light ray height is relatively low may be moved. On the other hand, as described above, the behavior of the aberration of the reflective surface is significantly different from that of a refractive lens, so in order to balance the aberrations of the refractive lens and the reflective surface, the reflective surface may be moved along with focusing. Taking these factors into consideration, the lens disposed closer to the image plane than the reflective surface or the aperture stop SP may be moved during focusing.

Each of the first transmissive reflective surface HM1 and the second transmissive reflective surface HM2 may not rotate by 0.5° or more around the optical axis during focusing. As will be described later, in the imaging optical system according to each example, the respective relative angles in a case where the optical axes of the quarter waveplate and the transmissive reflective surface are set as the rotation axis are important for suppressing ghosts and securing a normal light amount. Thus, a rotational movement of each of the first transmissive reflective surface HM1 and the second transmissive reflective surface HM2 around the optical axis during focusing may be sufficiently small. If all anisotropic elements such as the quarter waveplate and the transmissive reflective surface rotate by the same amount, there is no problem in terms of suppressing ghosts and securing the normal light amount. However, in a case where the polarization degree of the light incident on the imaging optical system is not low, the direction of the transmitting polarized light changes due to the same rotation amount of each element and it may cause brightness changes and color changes depending on the object along with focusing.

One of the first transmissive reflective surface HM1 and the second transmissive reflective surface HM2 may be spheric. Using an aspherical surface is beneficial to aberration correction, but it is more difficult to make the surface shape closer to a designed value than the spherical surface, so using the spherical surface is easier to manufacture. Minute processing marks tend to remain on aspheric surfaces, and in a case where such processing marks remain on reflective surfaces in particular, patterns resulting from the processing marks are likely to be reflected in the blur. In a lens having a large aperture diameter for still and moving image capturing applications, users also place importance on the quality of the blur, so such patterns may be avoided.

The first transmissive reflective surface HM1 and the second transmissive reflective surface HM2 may be polarization selective transmissive reflective elements. By inserting a 45° optical rotator such as a Faraday rotator between the transmissive reflective surfaces, the loss of light can be significantly reduced. In this case, the first quarter waveplate, the second quarter waveplate (QWP2), and the linear polarizer (POL) are not necessarily required in the configuration described below.

Next follows a description of conditions that may be satisfied by the imaging optical system according to each example. The imaging optical system according to each example may satisfy one or more of the following inequalities (1) to (10).

$$1.0 \leq fgr/fw \leq 4.5 \tag{1}$$

$$2.0 \leq (R1 \times R2)/\{(R1+R2) \times fgr\} \leq 7.0 \tag{2}$$

$$20 \leq vd_{mf} \leq 65 \tag{3}$$

$$20 \leq vd_{mm} \leq 96 \tag{4}$$

$$50 \leq vd_{mr} \leq 96 \tag{5}$$

$$1.40 \leq nd_m \leq 1.85 \tag{6}$$

$$1.45 \leq dp/fw \leq 4.0 \tag{7}$$

$$0.0 \leq |\theta m| \leq 8.0 \tag{8}$$

$$2.0 \leq |\theta l| \leq 50.0 \tag{9}$$

$$0.0 \leq \theta in \leq 40.0 \tag{10}$$

Here, fgr is a focal length of a lens unit including one of the first transmissive reflective surface HM1 or the second transmissive reflective surface HM2, which has a smaller radius of curvature. fw is a focal length of an imaging optical system at a wide-angle end. R1 is a radius of curvature of the first transmissive reflective surface HM1. R2 is a radius of curvature of the second transmissive reflective surface HM2. The radii of curvature R1 and R2 are absolute values of the radii of curvature of the first transmissive reflective surface HM1 and the second transmissive reflective surface HM2, respectively, and are always positive values regardless of their orientation. $vd_{mf}$ is an average value of Abbe numbers of one or more positive lenses disposed closer to the object than the first transmissive reflective surface HM1. $vd_{mm}$ is an average value of Abbe numbers of one or more positive lenses disposed between the first transmissive reflective surface HM1 and the aperture stop SP in a case where the aperture stop SP is disposed closer to the image plane than the second transmissive reflective surface HM2. $vd_{mr}$ is an average value of the Abbe number of a positive lenses disposed between the aperture stop SP and the second transmissive reflective surface HM2 in a case where the aperture stop SP is disposed closer to the object than the first transmissive reflective surface HM1. The Abbe numbers in inequalities (3) to (5) are expressed by the same definition as the Abbe number described later. $nd_m$ is a refractive index for the d-line of a positive lens (first lens) disposed between the first transmissive reflective surface HM1 and the second transmissive reflective surface HM2. dp is a distance on the optical axis between an object-side surface of a lens disposed closest to the object at the wide-angle end and the entrance pupil. $\theta m$ [°] is a smaller of open angles of the first transmissive reflective surface HM1 and the second transmissive reflective surface HM2. $\theta l$ [°] is a larger of the open angles of the first transmissive reflective surface HM1 and the second transmissive reflective surface HM2. An open angle is an angle of the surface normal relative to a direction orthogonal to the optical axis, and is evaluated at its maximum value within the effective surface. An effective surface is an area through which normal light rays pass, which are not ghosts or stray light. θin [°] is an incident angle in a case where a principal ray of the most off-axis light beam first enters one of the first transmissive reflective surface HM1 or the second transmissive reflective surface HM2, which has a smaller open angle.

In a case where the value becomes higher than the upper limit of inequality (1), the refractive power of the reflective surface becomes too strong for the imaging optical system, and the outer size of the lens increases in order to bounce the light rays up significantly. Furthermore, in order to correct aberrations in a lens unit having a large refractive power relative to the imaging optical system, many lenses are required, and the weight and overall length of the imaging optical system increase. In a case where the value becomes lower than the lower limit of inequality (1), the effect of the reflective surface on the imaging optical system is reduced, and aberration correction becomes insufficient. In this disclosure, it is not essential that the radii of curvature of the transmissive reflective surfaces are different from each other. However, the transmissive reflective surfaces may be different from each other, for example, because this allows for improved design freedom.

In a case where the value becomes higher than the upper limit of inequality (2), the refractive power of the reflective surface increases, and the outer size of the lens disposed on the object side increases in order to bounce the light rays up significantly. In addition, the Petzval sum becomes overcorrected. In a case where the value becomes lower than the lower limit of inequality (2), the refractive power of the reflective surface is reduced, and correction of longitudinal chromatic aberration and Petzval sum becomes insufficient.

The radius of curvature of the flat surface is ∞. In a case where only one transmissive reflective surface is flat, inequality (2) can be transformed into the following inequality (2') with the radius of curvature of the non-flat transmissive reflective surface being R.

$$2.0 \leq R/fgr \leq 7.0 \qquad\qquad (2')$$

In a case where the value becomes higher than the upper limit of inequality (3), the lens disposed closer to the image plane than the aperture stop SP and the lateral chromatic aberration cannot be balanced and increases. In a case where the value becomes lower than the lower limit of inequality (3), the dispersion of the positive lens increases and the longitudinal chromatic aberration increases.

In a case where the value becomes higher than the upper limit of inequality (4), a special ultra-low dispersion glass material that is difficult to process must be used and manufacturing becomes difficult. In a case where the value becomes lower than the lower limit of inequality (4), the wavelength dispersion of the positive lens increases, and the longitudinal and lateral chromatic aberrations increase.

In a case where the value becomes higher than the upper limit of inequality (5), a special ultra-low dispersion glass material that is difficult to process must be used, and manufacturing becomes difficult. In a case where the value becomes lower than the lower limit of inequality (5), the wavelength dispersion of the positive lens increases and the longitudinal and lateral chromatic aberrations increase.

In a case where the value becomes higher than the upper limit of inequality (6) and the reflective surface has sufficient power, the refractive power of the lens acting on the light beam three times between the transmissive reflective surfaces increases and the power balance of the entire imaging optical system destroys. In a case where the curvature of the reflective surface is relaxed, the power of the reflective surface is reduced, and it becomes difficult to utilize the aberration correction ability of the reflective surface. In a case where the value becomes lower than the lower limit of inequality (6), a special material that is difficult to process must be used, and manufacturing becomes difficult.

In a case where the value becomes higher than the upper limit of inequality (7), the entrance pupil becomes located in a recessed position, and the position where the off-axis light beam passes through the lens placed on the object side separates from the optical axis. Thus, a lens diameter of the lens disposed on the object side increases, and handling becomes inconvenient. In a case where the value becomes lower than the lower limit of inequality (7), the space for placing a sufficient number of lenses disposed closer to the object than the aperture stop SP and a movement distance of a lens unit during zooming cannot be sufficiently secured.

As will be described later, in the imaging optical system according to each example, at least one of the first transmissive reflective surface HM1 and the second transmissive reflective surface HM2 uses a polarization selective transmissive reflective element such as a polarizing beam splitter. It is difficult to form a polarization selective transmissive reflective element in a curved shape. In a case where the shape is close to a flat surface, it can be manufactured using a process similar to that of a flat surface, but the more the shape shifts from the flat surface, the more special the process becomes. Thus, in a case where the value becomes higher than the upper limit of inequality (8), the difficulty in forming the polarization selective transmissive reflective element increases. By definition, the value cannot become lower than the lower limit of inequality (8).

In a case where a flexible material such as a resin film or a wire grid using a resin film as a base material is used as the polarization selective transmissive reflective element, the surface accuracy of the transmissive reflective surface may be properly maintained. Thus, in a case where one of the first transmissive reflective surface HM1 and the second transmissive reflective surface HM2 is made of such a material, it may be cemented to glass or a hard resin with a glass transition temperature of 40°C or higher. Both sides may be cemented to glass or a hard resin with a glass transition temperature of 40°C or higher. The adhesive (including elastic adhesive) for cementing is not particularly specified, but the adhesive layer may be 25 μm or less, or 15 μm or less. In a case where only one side is cemented, a holding member may not directly contact the transmissive reflective surface when holding the lens. For example, it may be held at a part of the cemented glass or hard resin member. Thus, the surface distortion of the transmissive reflective surface can be reduced. Regarding the surface accuracy, the roughness of the reflected wavefront may be sufficiently smooth, and the rms of the components of 1/mm or more on the reflected wavefront may be 10 nm or less, and the rms of the components of 0.05/mm or more and 1/mm or less may be 10 nm or less. Thus, image quality degradation due to poor surface accuracy of the reflective surface may be sufficiently suppressed.

In a case where the value becomes higher than the upper limit of inequality (9), the open angle of the transmissive reflective surface increases and it becomes difficult to manufacture a homogeneous transmissive reflective element. In a case where the value becomes lower than the lower limit of inequality (9), the power of the reflective surface is reduced and aberration correction using the reflective surface becomes insufficient.

Since the characteristics of polarizing elements such as polarization selective transmissive reflective elements have an angle dependency, it becomes difficult to obtain the desired characteristics in a case where the value becomes higher than the upper limit of inequality (10). By definition, the value cannot become lower than the lower limit of inequality (10).

The lower limit of inequality (1) can be set to 1.1, 1.2, 1.3, 1.4, or 1.5. The upper limit of inequality (1) may be set to 4.3, 4.1, 3.9, 3.7, or 3.5.

The lower limit of inequality (2) may be set to 2.1, 2.2, 2.3, 2.4, or 2.5. The upper limit of inequality (2) may be set to 6.8, 6.6, 6.4, 6.2, or 6.0.

The lower limit of inequality (3) may be set to 21, 22, 23, 24, or 25. The upper limit of inequality (3) may be set to 63, 61, 59, 57, or 55.

The lower limit of inequality (4) may be set to 21, 22, 23, 24, or 25. The upper limit of inequality (4) may be set to 91, 87, 83, 79, or 75.

The lower limit of inequality (5) may be set to 51, 52, 53, 54, or 55. The upper limit of inequality (5) may be set to 95, 92, 89, 86, or 83.

The lower limit of inequality (6) may be set to 1.41, 1.42, 1.43, 1.44, or 1.45. The upper limit of inequality (6) may be set to 1.84, 1.83, 1.82, 1.81, or 1.80.

The lower limit of inequality (7) may be set to 1.50, 1.55, 1.60, 1.65, or 1.70. The upper limit of inequality (7) may be set to 3.9, 3.8, 3.7, 3.6, or 3.5.

The upper limit of inequality (8) may be set to 7.0, 6.0, 5.0, 4.5, or 4.0.

The lower limit of inequality (9) may be set to 2.5, 3.0, 3.5, 4.0, or 4.5.

The upper limit of inequality (9) may be set to 45, 42, 40, 38, or 35.

The upper limit of inequality (10) may be set to 37, 34, 31, 28, or 25.

One of the first transmissive reflective surface HM1 and the second transmissive reflective surface HM2 may be a surface that separates incident light into reflected light and transmitting light according to the polarization state. For example, a polarization selective transmissive reflective element may be used. Examples of the polarization selective transmissive reflective elements include "WGF" manufactured by Asahi Kasei Corporation, "IQP-E" manufactured by 3M Company, and "ProFlux" manufactured by Moxtek, Inc. As the polarization selective transmissive reflective element, an optical element may be used that is created by forming a grid on the lens reflective surface during lens molding and then depositing, printing, or lithographically depositing a metal or dielectric on the grid. On the other hand, a half-mirror, cholesteric liquid crystal, or the like may be used. In a case where a half-mirror is used, the amount of randomly polarized light incident from the object side is 12.5% or less by the time it reaches the image plane. In a case where a cholesteric liquid crystal is used, a light amount on the image plane can be approximately doubled compared to that in a case where a half-mirror is used.

In the imaging optical system according to each example, for example, the following configuration can suppress a decrease in the light amount in the normal imaging optical path while reducing ghost light (unnecessary light leakage) from the optical path that transmits through the transmissive reflective surface without being reflected even once.

CONFIGURATION 1 UTILIZING POLARIZATION

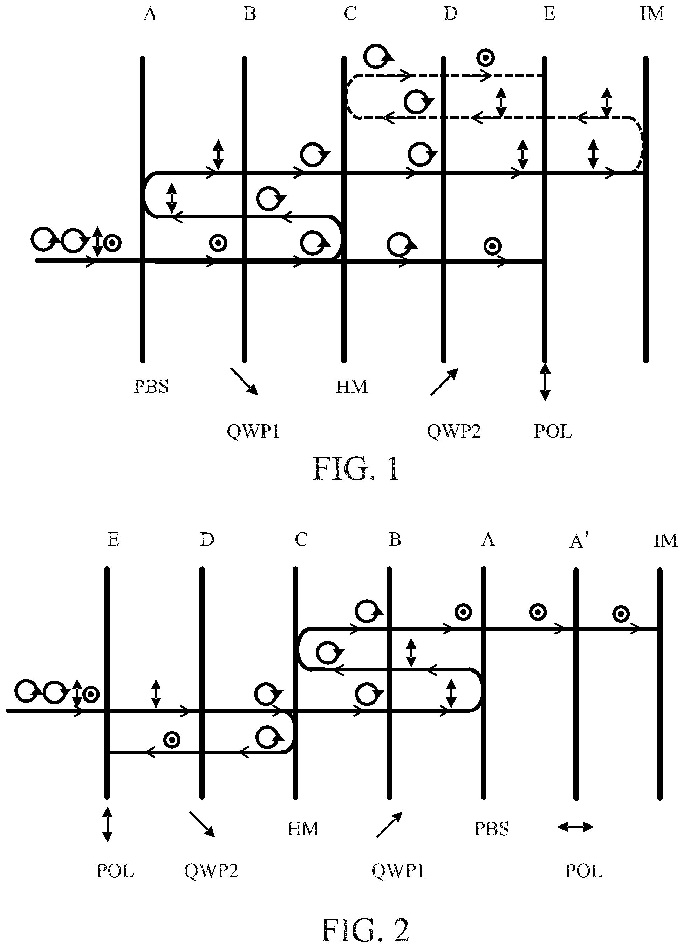

Referring now to Fig. 1, a description will be given of the configuration utilizing polarization. The imaging optical system using this configuration has two transmissive reflective surfaces. Here, the transmissive reflective surface located on the object side of the imaging optical system using this configuration is a polarization selective transmissive reflective element (PBS): A. The transmissive reflective surface located on the image surface side of the imaging optical system using this configuration is a half-mirror (HM): C. A first quarter waveplate (QWP1): B is disposed between the polarization selective transmissive reflective element PBS and the half-mirror HM. A second quarter waveplate (QWP2): D and a linear polarizer (POL): E are disposed between the half-mirror HM and the imaging surface IM in this order from the object side to the image side.

Here, the polarization selective transmissive reflective element A is an element configured to reflect linearly polarized light polarized in the same direction as when it transmitted through the linear polarizer E, and to transmit linearly polarized light orthogonal to the linear polarizer. The polarization selective transmissive reflective element A is, for example, a wire grid polarizer or a reflective polarizer having a laminated retardation film configuration. In this case, the wire grid forming surface or retardation film surface of the polarization selective transmissive reflective element A functions as a transmissive reflective surface. A wire grid polarizer does not necessarily have to be one in which metal wires are aligned, as long as it has thin metal or dielectric layers at a specified distance and functions as a polarization selective transmissive reflective element. For example, an element in which metal or dielectric layers are aligned by vapor deposition can be used.

The first quarter waveplate B and the second quarter waveplate D are arranged with their slow axes tilted by 45° relative to the polarization transmission axis of the linear polarizer E. The first quarter waveplate B and the second quarter waveplate D may be arranged with their slow axes tilted by 90°. This arrangement cancels out the wavelength dispersion characteristics of the wavelength plates when light transmits through the first quarter waveplate B and the second quarter waveplate D.

The half-mirror C is a half-mirror formed, for example, by a dielectric multilayer film or metal deposition, and the mirror surface of the half-mirror C functions as a transmissive reflective surface. The linear polarizer E is, for example, an absorptive linear polarizer.

Next follows a description of the optical path selection and operation in the polarization utilization configuration.

Light incident on the imaging optical system from the object side becomes linearly polarized light by the polarization selective transmissive reflective element A, becomes circularly polarized light by the first quarter waveplate B, and enters the half-mirror C. A portion of the light that reaches the half-mirror C is reflected and becomes circularly polarized in the reverse direction, and returns to the first quarter waveplate B.

The reverse-circularly polarized light that has returned to the first quarter waveplate B is returned to the polarization selective transmissive reflective element A by the first quarter waveplate B as linearly polarized light polarized in a direction orthogonal to the direction when the light first passed through the polarization selective transmissive reflective element A. The light that has returned to the polarization selective transmissive reflective element A is reflected by the polarization selective transmissive reflective element A. Here, due to the polarization selectivity of the polarization selective transmissive reflective element A, linearly polarized light polarized in a direction orthogonal to the direction when the light first passed through the polarization selective transmissive reflective element A is reflected.

On the other hand, a part of the light that has reached the half-mirror C transmits through it and becomes linearly polarized by the second quarter waveplate D in the same direction as when the light passed through the polarization selective transmissive reflective element A, and enters the linear polarizer E and is absorbed by the linear polarizer E.

The light reflected by the polarization selective transmissive reflective element A is circularly polarized by the first quarter waveplate B and enters the half-mirror C. A part of the light that reaches the half-mirror C transmits it and enters the second quarter waveplate D. The second quarter waveplate D causes the incident light to become linearly polarized light parallel to the linearly polarized light reflected by the polarization selective transmissive reflective element A. The light that has passed through the second quarter waveplate D enters the linear polarizer E. Here, the polarization of the light and the transmission axis of the linear polarizer E coincide, so most of the light transmits through it and is guided to the imaging surface IM.

Due to the above operation, only the light that has transmitted through the polarization selective transmissive reflective element PBS, been reflected by the half-mirror C, been reflected by the polarization selective transmissive reflective element PBS, and transmitted through the half-mirror C is guided to the imaging surface IM.

In a case where a cholesteric liquid crystal is used instead of the half-mirror C, the cholesteric liquid crystal may reflect a large amount of circularly polarized light in the direction of the incident light in the first reflection. Thus, the light amount on the normal optical path can be increased while ghost light is reduced.

Solid-state image sensors and Charge Coupled Devices (CCDs) that can be used as the imaging surface IM generally have high surface reflectance. In this configuration, the light reflected by the imaging surface IM transmits through the linear polarizer E again and is converted into circularly polarized light by the second quarter waveplate D. Thereafter, the light emitted from the second quarter waveplate D is reflected by the half-mirror C, becomes circularly polarized light in the opposite direction, and transmits through the second quarter waveplate D again. At this time, the circularly polarized light is converted by the second quarter waveplate D into linearly polarized light in a direction orthogonal to that of the light that was just before passing through the linear polarizer E. Since the direction of this linearly polarized light is orthogonal to the transmission axis of the linear polarizer E, most of the light is absorbed by the linear polarizer E. In this manner, in this configuration, most of the light that is reflected by the imaging surface IM and the half-mirror C in this order is cut off, and ghosts and flares related to the imaging surface IM are less noticeable. In order to obtain such a reflection reducing effect, an optical low-pass filter using birefringence may not exist between the imaging surface IM and the linear polarizer E. This is because the optical low-pass filter causes the polarization state to shift from the desired polarization state.

In this configuration, a quarter waveplate may be disposed between the polarization selective transmissive reflective element A and the object. In this case, the quarter waveplate is disposed so that the fast axis or slow axis of the quarter waveplate forms an angle of 45° relative to the transmission axis of the polarization selective transmissive reflective element A. Thus, even if the light incident from the object side is linearly polarized light, imaging can be performed regardless of its polarization direction. In addition, a depolarizing element may be placed instead of the quarter waveplate. For example, "Cosmoshine SRF" by Toyobo Co., Ltd. can be used as the depolarizing element. Cosmoshine SRF is a film with large birefringence of around 10,000 nm, and using such a film can suppress color unevenness caused by the wavelength characteristic and angle characteristic of the waveplate compared to the case where a quarter waveplate is used.

CONFIGURATION 2 UTILIZING POLARIZATION

Referring now to Fig. 2, a description will be given of a configuration utilizing polarization. The imaging optical system using this configuration includes two transmissive reflective surfaces. Here, the transmissive reflective surface disposed on the object side of the imaging optical system using this configuration is a half-mirror (HM): C. The transmissive reflective surface disposed on the imaging surface side of the imaging optical system using this configuration is a polarization selective transmissive reflective element (PBS): A. A first quarter waveplate (QWP1): B is disposed between the polarization selective transmissive reflective element PBS and the half-mirror HM. A linear polarizer (POL): E and a second quarter waveplate (QWP2): D are arranged in this order from the object side to the image side between the half-mirror HM and the object surface.

Here, the configuration of each polarizing element and the arrangement of the optical axis orientation are the same as those of the configuration 1 utilizing polarization.

Next follows a description of the optical path selection and operation in the configuration utilizing polarization.

Light entering the imaging optical system from the object side becomes linearly polarized light by the linear polarizer E, becomes circularly polarized by the second quarter waveplate D, and enters the half-mirror C. Part of the light that reaches the half-mirror C is reflected and becomes circularly polarized light in the opposite direction, and returns to the second quarter waveplate D.

The light that has reached the half-mirror C and been reflected becomes circularly polarized light in the opposite direction to that at the time of incidence. This light becomes linearly polarized light by the second quarter waveplate D in a direction orthogonal to that when it passed through the linear polarizer E, and enters the linear polarizer E and is absorbed by it.

On the other hand, the light that has transmitted through the half-mirror C becomes linearly polarized light by the first quarter waveplate B in the same direction as that of the light that was polarized immediately after transmitting through the linear polarizer E. This linearly polarized light is reflected by the polarization selective transmissive reflective element A and returns to the first quarter waveplate B. Thereafter, the light is converted into circularly polarized light by the first quarter waveplate B, and a part of it is reflected by the half-mirror C. The light reflected by the half-mirror C enters the first quarter waveplate B again and is converted into linearly polarized light whose polarization direction is orthogonal to that when it was reflected by the polarization selective transmissive reflective element A. This linearly polarized light transmits through the polarization selective transmissive reflective element A and is guided to the imaging surface IM.

Due to the above operation, only the light that has transmitted through the half-mirror C, been reflected by the polarization selective transmissive reflective element PBS, been reflected by the half-mirror C, and transmitted through the polarization selective transmissive reflective element PBS is guided to the imaging surface IM.

In this arrangement, a linear polarizer A' may be disposed between the polarization selective transmissive reflective element A and the imaging surface IM. In this case, the transmission axes of the linear polarizer A' and the polarization selective transmissive reflective element A coincide. Thus, light that is reflected by the imaging surface IM, further reflected by the polarization selective transmissive reflective element A, and then again enters the imaging surface IM to cause ghosts and flares can be absorbed.

In this configuration, a quarter waveplate may be disposed between the linear polarizer E and the object. In this case, the quarter waveplate is placed so that the fast axis or slow axis of the quarter waveplate forms an angle of 45° relative to the transmission axis of the linear polarizer E. Thus, even if the light incident from the object side is linearly polarized light, imaging can be performed regardless of its polarization direction. A depolarizing element may be disposed instead of the quarter waveplate. For example, Toyobo Co., Ltd.'s "Cosmoshine SRF" can be used as the depolarizing element.

In the above description of the configuration, terms such as orthogonal, parallel, and 45° are used, but they do not have to be strictly 90°, 0°, and 45°. However, they may be within $\pm 5°$, $\pm 2°$, or $\pm 1°$ of the set angle.

This depends significantly on the characteristics of the first and second quarter waveplates. In a case where the characteristic of the quarter waveplate is ideal and a characteristic change against a wavelength and incident angle is sufficiently small, for example, in the configuration of Fig. 1, relative angles between "A and B" and "D and E" are not limited. In reality, it is difficult to make the characteristic of the quarter waveplate such ideal, so an angle that makes the intensity and tone of ghost light less noticeable may be used.

In both of the above two types of configurations, the same two QWPs may be used. There is no problem if the QWP is ideal (one that gives a phase of exactly quarter wavelength to all wavelengths and all light ray incident angles within the range of use). However, in reality, such a QWP does not exist, and a phase given to light differs according to the wavelength of the transmitted light, etc. In the above two types of configurations, the phases given by QWP1 and QWP2 are exactly cancelled when light transmits through the two QWPs, and only the desired light can be emitted toward the image surface. That is, the light reflected once by each of the first transmissive reflective surface and the second transmissive reflective surface is emitted to the image side, and the light that is not reflected once or the light that is reflected twice is absorbed by the polarizer. In this case, if the characteristics of the QWPs are different, unintended light may be emitted toward the image surface accordingly, ghosts and flares may increase, and the image quality may deteriorate.

Now consider a case where the above two types of configurations are used in combination with an image sensor including an optical low-pass filter. Then, the relative angle between the transmission axis of the polarizer closest to the image plane and the fast axis of a birefringent plate closest to the object among the birefringent plates that make up the optical low-pass filter may be 45°or 135°. Thus, a low-pass effect similar to that of a normal optical system (one that has almost no polarization dependency like a general refractive optical system) can be obtained. Alternatively, a quarter waveplate may be disposed closer to the image plane than the polarizer closest to the image plane. In this case, the transmission axis of the polarizer closest to the image plane and the fast axis of the quarter waveplate may be 45° or 135°. Thus, emitting circularly polarized light toward the image sensor can provide a low-pass effect similar to that of a normal optical system. Alternatively, placing a plastic molded lens with large birefringence closer to the image plane than the polarizer closest to the image plane can make the emitted light pseudo-randomly polarized light, and provide a low-pass effect similar to that of a normal optical system.

In the above two types of configurations, the polarization selective transmissive reflective element, quarter waveplate, and linear polarizer may be circular or rectangular. These optical elements are mainly made of polymer materials and are available at low cost. For such elements, they may be cemented to a glass or resin plate, for example, as described above, to secure sufficient surface accuracy. This embodiment can eliminate material loss by bonding them in large size and cutting out a necessary amount for a rectangle from there. As described above, an azimuth between elements is important in the above two types of configurations. By using a rectangular element, it becomes easier to guarantee the outer shape of the parts and the orientation of the elements (fast axis/slow axis, transmission axis/absorption axis, transmission axis/reflection axis) for each part, and the azimuth adjustment can be simplified or omitted.

In the imaging optical system according to each example, the lens may be made of either a resin material or a glass material. However, the lens disposed between the first transmissive reflective surface HM1 and the second transmissive reflective surface HM2 may have low birefringence.

Next, the imaging optical system according to each example will be described in detail.

A plurality of lens units according to Example 1 include first to third lens units arranged in this order from the object side to the image side. The first and second lens units have negative and positive refractive powers, respectively. The third lens unit includes a sensor protective glass. The first and second lens units correspond to the first lens unit L1 and the second lens unit L2, respectively.

A plurality of lens units according to Examples 2 to 3 and 9 to 10 include first to fourth lens units arranged in this order from the object side to the image side. The first to third lens units have negative, positive, and positive refractive powers, respectively. The fourth lens unit includes a sensor protective glass. The first lens unit and the second lens unit correspond to the first lens unit L1 and the second lens unit L2, respectively.

A plurality of lens units according to Examples 4 to 5 and 13 to 15 include first to fifth lens units arranged in this order from the object side to the image side. The first to fourth lens units have positive, negative, positive, and positive refractive powers, respectively. The fifth lens unit includes a sensor protective glass. The second lens unit and the third lens unit correspond to the first lens unit L1 and the second lens unit L2, respectively.

A plurality of lens units according to Examples 6 to 8 include first to fifth lens units arranged in this order from the object side to the image side. The first to fourth lens units have negative, positive, positive, and positive refractive powers, respectively. The fifth lens unit includes a sensor protective glass. The first lens unit and the second lens unit correspond to the first lens unit L1 and the second lens unit L2, respectively.

A plurality of lens units according to Example 11 include first to fifth lens units arranged in this order from the object side to the image side, and have negative, positive, positive, negative, and positive refractive powers, respectively. The first lens unit and the third lens unit correspond to the first lens unit L1 and the second lens unit L2, respectively.

A plurality of lens units according to Example 12 include first to fourth lens units arranged in this order from the object side to the image side, and have negative, positive, negative, and positive refractive powers, respectively. The first lens unit and the second lens unit correspond to the first lens unit L1 and the second lens unit L2, respectively.

A plurality of lens units according to Example 16 are made up of first to fourth lens units arranged in order from the object side to the image side. The first to third lens units have negative, positive, and negative refractive powers, respectively. The first lens unit and the second lens unit correspond to the first lens unit L1 and the second lens unit L2, respectively. The fourth lens unit includes a sensor protective glass.

In the imaging optical system according to Example 7, for example, a light amount reaching the imaging surface can be significantly increased by adopting the following configuration. The first transmissive reflective surface HM1 is a half-mirror, the second transmissive reflective surface HM2 is a polarization selective transmissive reflective element, and a polarization selective transmissive reflective element is also disposed on an object-side surface of the fifth lens counted from the object side. In addition, a quarter waveplate is disposed between the polarization selective transmissive reflective element and the first transmissive reflective surface HM1. Both the light reflected by the first transmissive reflective surface HM1 and the transmitting light are reflected by different polarization selective transmissive reflective element elements. Among them, the light reflected by the second transmissive reflective surface HM2 is reflected again by the first transmissive reflective surface HM1 and goes to the image side. The light reflected by the other polarization selective transmissive reflective element transmits through the first transmissive reflective surface HM1 and goes to the image side. Here, the fifth and sixth lenses counted from the object side are symmetrical with respect to the first transmissive reflective surface HM1. Therefore, the two beams that first enter the first transmissive reflective surface HM1 and split overlap each other when they are next emitted from the first transmissive reflective surface HM1 to the image side (in an ideal state with no manufacturing errors, etc.). Thus, by imaging both beams split by the half-mirror at the same position on the image plane, the illuminance on the image plane can be roughly doubled.

In the imaging optical system according to Example 8, the lens on the image side of the fourth lens unit is molded from resin. Thus, using resin only for the aspherical component can easily achieve an aspherical surface.

In the imaging optical system according to Example 12, the three lenses disposed just after the aperture stop SP (on the image side) may be used as an image stabilizing unit.

Below are numerical values corresponding to Examples 1 to 16, respectively.

In surface data of each numerical example, r represents a radius of curvature of each optical surface, and d (mm) represents an on-axis distance between m-th and (m+1)-th surfaces, where m is a surface number counted from the light incident side. nd represents a refractive index of each optical element for the d-line, and vd represents an Abbe number of the optical element. The Abbe number vd of a certain material is expressed as follows:

$$vd=(Nd-1)/(NF-NC)$$

where Nd, NF, and NC are refractive indices at the d-line (587.6 nm), F-line (486.1 nm), and C-line (656.3 nm) in the Fraunhofer line.

The refractive index and Abbe number are omitted for regions where the medium is air.

In each numerical example, d, focal length (mm), F-number, and half angle of view (°) are all values when the optical system according to each example is in focus on an object at infinity. "Back focus" is a distance on the optical axis from the final lens surface (the lens surface closest to the image plane) to the paraxial image plane, expressed as an air-equivalent length. An "overall lens length" is a distance on the optical axis from the frontmost lens surface (the lens surface closest to the object) of the imaging optical system to the final surface, plus the back focus. Regarding an overlapping part of the optical path, the "overall lens length" is calculated duplicately. In other words, it is a physical distance (not an optical path length) that the on-axis light ray travels between the first surface and the image plane.

In a case where the optical surface is aspheric, an asterisk * is added to the right of the surface number. The aspheric shape is expressed as follows:

$$x=(h^2/R)/[1+\{1-(1+k)(h/R)^2\}^{1/2}]+A4\times h^4+A6\times h^6+A8\times h^8+A10\times h^{10}+A12\times h^{12}$$

where x is a displacement amount from a surface vertex in the optical axis direction, h is a height from the optical axis in a direction orthogonal to the optical axis, R is a paraxial radius of curvature, k is a conic constant, and A4, A6, A8, A10, and A12 are aspheric coefficients of each order. "e±XX" in each aspheric coefficient means "$\times 10^{\pm XX}$."

In a case where the radius of curvature is considered in inequality (2) for an aspheric surface, a value of R in the above equation is used for the calculation. WIDE represents a wide-angle end, MIDDLE represents an intermediate zoom position, and TELE represents a telephoto end.

NUMERICAL EXAMPLE 1

UNIT: mm

SURFACE DATA

| Surface No. | r | d | nd | vd |
|---|---|---|---|---|
| 1* | 126.887 | 1.20 | 1.88202 | 37.2 |
| 2* | 12.293 | 4.94 | | |
| 3 | 29.319 | 2.23 | 2.10420 | 17.0 |
| 4 | 56.426 | (Variable) | | |
| 5 (SP) | ∞ | 0.10 | | |
| 6 | 31.847 | 6.52 | 1.92119 | 24.0 |
| 7 | ∞ | 2.49 | 1.48749 | 70.2 |
| 8 | -27.763 | -2.49 | | |
| 9 | ∞ | 2.49 | | |
| 10 | -27.763 | 1.00 | 2.00100 | 29.1 |
| 11 | 8.415 | 0.36 | | |
| 12* | 15.156 | 3.47 | 1.49710 | 81.6 |
| 13* | -10.100 | 0.63 | | |
| 14 | 8.532 | 3.77 | 1.65160 | 58.5 |
| 15 | -16.421 | (Variable) | | |
| 16 | ∞ | 0.80 | 1.51633 | 64.1 |
| 17 | ∞ | (Variable) | | |
| Image Plane | ∞ | | | |

ASPHERIC DATA

1st Surface
K = 0.00000e+00 A 4= 1.95177e-05 A 6=-1.02993e-07

2nd Surface
K = 0.00000e+00 A 4=-5.80928e-06 A 6=-6.10324e-07 A 8= 4.29523e-09 A10=-4.70092e-11

12th Surface
K = 0.00000e+00 A 4=-6.73561e-04 A 6=-4.54930e-05 A 8= 4.22526e-06 A10=-2.56569e-07

13th Surface
K = 0.00000e+00 A 4=-1.60439e-04 A 6=-1.85977e-05

VARIOUS DATA

| | ZOOM RATIO | | 1.55 | |
|---|---|---|---|---|
| | | WIDE | MIDDLE | TELE |
| | Focal Length | 4.20 | 5.35 | 6.50 |
| | Fno | 1.20 | 1.20 | 1.20 |
| | Half Angle of View [°] | 40.21 | 33.57 | 28.64 |
| | Image Height | 3.55 | 3.55 | 3.55 |

(continued)

| ZOOM RATIO | | 1.55 | | |
|---|---|---|---|---|
| | | WIDE | MIDDLE | TELE |
| Overall Lens Length | | 56.47 | 43.66 | 35.57 |
| BF | | 0.30 | 0.30 | 0.30 |
| d4 | | 23.56 | 10.25 | 1.66 |
| d15 | | 0.10 | 0.60 | 1.11 |
| d17 | | 0.30 | 0.30 | 0.30 |

ZOOM LENS UNIT DATA

| Lens Unit | Starting Surface | Focal Length |
|---|---|---|
| 1 | 1 | -24.38 |
| 2 | 5 | 10.66 |
| 3 | 16 | ∞ |

NUMERICAL EXAMPLE 2

UNIT: mm

SURFACE DATA

| Surface No. | r | d | nd | vd |
|---|---|---|---|---|
| 1 | 179.690 | 2.25 | 1.88300 | 40.8 |
| 2 | 68.423 | 12.72 | | |
| 3 | -325.384 | 2.00 | 1.83481 | 42.7 |
| 4 | 134.138 | 8.73 | | |
| 5 | 127.906 | 6.64 | 1.80809 | 22.8 |
| 6 | 4979.634 | (Variable) | | |
| 7* | 189.612 | 0.05 | 1.52000 | 50.0 |
| 8 | 185.018 | 14.25 | 2.00100 | 29.1 |
| 9 | -277.632 | 10.15 | | |
| 10 | -128.362 | 2.00 | 1.86966 | 20.0 |
| 11 | 173.498 | 8.91 | 1.65412 | 39.7 |
| 12 | ∞ | -8.91 | | |
| 13 | 173.498 | 8.91 | | |
| 14 | ∞ | 1.20 | 1.51633 | 64.1 |
| 15 | ∞ | (Variable) | | |
| 16 (SP) | ∞ | 9.16 | | |
| 17 | 46.992 | 8.54 | 1.80809 | 22.8 |
| 18 | -39.174 | 1.50 | 1.91082 | 35.2 |
| 19 | 41.527 | 3.62 | | |
| 20* | -74.151 | 1.00 | 2.00100 | 29.1 |
| 21 | 63.678 | 6.73 | 1.43875 | 94.7 |
| 22 | -42.731 | 0.26 | | |
| 23 | 87.411 | 10.62 | 1.43875 | 94.7 |
| 24 | -32.587 | 0.70 | | |
| 25 | 57.255 | 9.91 | 1.43875 | 94.7 |

(continued)

| Surface No. | r | d | nd | vd |
|---|---|---|---|---|
| 26 | -52.383 | 0.10 | | |
| 27 | -93.749 | 3.00 | 1.95150 | 29.8 |
| 28* | 2595.989 | (Variable) | | |
| 29 | ∞ | 3.00 | 1.51633 | 64.1 |
| 30 | ∞ | | (Variable) | |
| Image Plane | ∞ | | | |

ASPHERIC DATA

7th Surface
K = 0.00000e+00 A 4=-2.82292e-07 A 6= 8.05501e-11 A 8=-2.96788e-13 A10= 3.79341e-16 A12=-1.71510e-19

20th Surface
K = 0.00000e+00 A4=-3.03173e-06 A 6= 6.42594e-10 A 8=-4.28805e-12

28th Surface
K = 0.00000e+00 A 4= 2.96862e-06 A 6=-6.45369e-09 A 8= 3.90106e-11 A10=-8.22782e-14 A12= 7.45235e-17

VARIOUS DATA

| ZOOM RATIO | | 1.61 | | |
|---|---|---|---|---|
| | | WIDE | MIDDLE | TELE |
| Focal Length | | 28.00 | 35.00 | 45.00 |
| Fno | | 1.20 | 1.20 | 1.20 |
| Half Angle of View [°] | | 37.26 | 31.32 | 25.33 |
| Image Height | | 21.30 | 21.30 | 21.30 |
| Overall Lens Length | | 222.37 | 194.22 | 171.73 |
| BF | | 0.40 | 0.40 | 0.40 |
| d6 | | 62.52 | 29.69 | 0.50 |
| d15 | | 1.00 | 5.69 | 12.39 |
| d28 | | 13.60 | 13.60 | 13.60 |
| d30 | | 0.40 | 0.40 | 0.40 |

ZOOM LENS UNIT DATA

| Lens Unit | Starting Surface | Focal Length |
|---|---|---|
| 1 | 1 | -101.44 |
| 2 | 7 | 55.49 |
| 3 | 16 | 83.42 |
| 4 | 29 | ∞ |

NUMERICAL EXAMPLE 3

UNIT: mm

SURFACE DATA

| Surface No. | r | d | nd | vd |
|---|---|---|---|---|
| 1 | 253.089 | 2.25 | 1.88300 | 40.8 |
| 2 | 70.885 | 12.70 | | |
| 3 | -250.087 | 2.00 | 1.72916 | 54.7 |
| 4 | 127.485 | 5.38 | | |
| 5 | 105.692 | 12.83 | 1.63987 | 34.6 |
| 6 | -224.790 | (Variable) | | |
| 7 | 152.928 | 3.28 | 2.00073 | 25.9 |
| 8 | 1006.842 | 0.50 | | |
| 9 | 360.164 | 2.00 | 1.95906 | 17.5 |
| 10 | 152.231 | 2.51 | | |
| 11 | ∞ | -2.51 | | |
| 12 | 152.231 | 2.51 | | |
| 13 | ∞ | 1.20 | 1.51633 | 64.1 |
| 14 | ∞ | (Variable) | | |
| 15 (SP) | ∞ | 10.33 | | |
| 16 | 26.347 | 8.52 | 1.69895 | 30.1 |
| 17 | -61.500 | 1.50 | 1.83023 | 44.7 |
| 18 | 29.992 | 2.86 | | |
| 19 | 70.013 | 1.50 | 2.00074 | 26.0 |
| 20 | 22.553 | 4.71 | 1.43875 | 94.9 |
| 21 | 501.767 | 3.13 | | |
| 22 | 41.326 | 12.38 | 1.43875 | 94.9 |
| 23 | -40.904 | 0.70 | | |
| 24 | -93.842 | 6.26 | 1.43875 | 94.9 |
| 25 | -27.458 | 0.10 | | |
| 26* | 177.076 | 3.00 | 1.95150 | 29.8 |
| 27* | 76.741 | (Variable) | | |
| 28 | ∞ | 3.00 | 1.51633 | 64.1 |
| 29 | ∞ | (Variable) | | |
| Image Plane | ∞ | | | |

ASPHERIC DATA

26th Surface
K = 0.00000e+00 A 4=-5.45733e-05

27th Surface
K = 0.00000e+00 A 4=-5.27699e-05 A 6= 3.19864e-08 A 8=-6.16153e-12

VARIOUS DATA

| ZOOM RATIO | | | 1.58 |
|---|---|---|---|
| | WIDE | MIDDLE | TELE |
| Focal Length | 28.50 | 35.00 | 45.00 |

(continued)

| ZOOM RATIO | | | 1.58 |
|---|---|---|---|
| | WIDE | MIDDLE | TELE |
| Fno | 1.40 | 1.40 | 1.40 |
| Half Angle of View [°] | 35.22 | 31.72 | 25.68 |
| Image Height | 20.12 | 21.64 | 21.64 |
| Overall Lens Length | 189.76 | 161.78 | 137.77 |
| BF | 0.40 | 0.40 | 0.40 |
| d6 | 67.14 | 33.39 | 0.50 |
| d14 | 1.00 | 6.77 | 15.66 |
| d27 | 13.56 | 13.56 | 13.56 |
| d29 | 0.40 | 0.40 | 0.40 |

ZOOM LENS UNIT DATA

| Lens Unit | Starting Surface | Focal Length |
|---|---|---|
| 1 | 1 | -134.43 |
| 2 | 7 | 67.83 |
| 3 | 15 | 69.17 |
| 4 | 28 | ∞ |

NUMERICAL EXAMPLE 4

UNIT: mm

SURFACE DATA

| Surface No. | r | d | nd | vd |
|---|---|---|---|---|
| 1 | 133.313 | 3.79 | 1.84666 | 23.8 |
| 2 | 141.297 | (Variable) | | |
| 3 | 164.046 | 1.39 | 1.60471 | 66.6 |
| 4 | 41.403 | 17.99 | | |
| 5* | -65.618 | 1.50 | 1.49700 | 81.5 |
| 6 | 123.599 | 0.10 | | |
| 7 | 81.194 | 5.18 | 1.69895 | 30.1 |
| 8 | 369.534 | (Variable) | | |
| 9 | -465.041 | 1.40 | 1.77260 | 25.2 |
| 10 | 135.519 | 3.21 | 1.79611 | 45.2 |
| 11 | ∞ | -3.21 | | |
| 12 | 135.519 | 3.21 | | |
| 13 | ∞ | 1.70 | 2.00330 | 28.3 |
| 14 | 345.434 | (Variable) | | |
| 15 (SP) | ∞ | 3.66 | | |
| 16 | 19.679 | 7.46 | 1.69894 | 30.1 |
| 17 | -35.718 | 1.00 | 1.79147 | 48.0 |
| 18 | 23.464 | 1.66 | | |
| 19 | 162.486 | 1.00 | 2.00330 | 28.3 |
| 20 | 15.825 | 5.01 | 1.43875 | 94.9 |

(continued)

| Surface No. | r | d | nd | vd |
|---|---|---|---|---|
| 21 | -61.605 | 4.39 | | |
| 22 | 48.305 | 6.61 | 1.49697 | 81.4 |
| 23 | -25.091 | 0.70 | | |
| 24 | -39.230 | 4.06 | 1.55800 | 72.9 |
| 25 | -20.385 | 0.10 | | |
| 26* | 281.010 | 2.00 | 1.95150 | 29.8 |
| 27* | 102.305 | (Variable) | | |
| 28 | ∞ | 2.00 | 1.51633 | 64.1 |
| 29 | ∞ | (Variable) | | |
| Image Plane | ∞ | | | |

ASPHERIC DATA

5th Surface
K = 0.00000e+00 A 4= 3.56820e-07 A 6=-2.67043e-10 A 8= 6.04949e-13 A10=-4.23551e-16

26th Surface
K = 0.00000e+00 A 4=-1.43829e-04 A 6= 4.88031e-08 A 8= 5.51813e-10

27th Surface
K = 0.00000e+00 A 4=-1.40599e-04 A 6= 2.36851e-07 A 8= 8.21599e-11

VARIOUS DATA

| ZOOM RATIO | | 2.76 | | |
|---|---|---|---|---|
| | WIDE | MIDDLE 1 | MIDDLE 2 | TELE |
| Focal Length | 15.40 | 29.00 | 42.50 | 36.01 |
| Fno | 1.42 | 1.42 | 1.42 | 1.42 |
| Half Angle of View [°] | 36.86 | 24.94 | 17.61 | 20.54 |
| Image Height | 11.54 | 13.49 | 13.49 | 13.49 |
| Overall Lens Length | 165.18 | 165.18 | 165.18 | 165.18 |
| BF | 0.40 | 0.40 | 0.40 | 0.40 |
| d2 | 0.70 | 33.25 | 35.08 | 35.88 |
| d8 | 68.66 | 20.03 | 2.02 | 9.03 |
| d14 | 1.54 | 17.61 | 33.79 | 25.98 |
| d27 | 11.55 | 11.55 | 11.55 | 11.55 |
| d29 | 0.40 | 0.40 | 0.40 | 0.40 |

ZOOM LENS UNIT DATA

| Lens Unit | Starting Surface | Focal Length |
|---|---|---|
| 1 | 1 | 2288.08 |
| 2 | 3 | -59.87 |
| 3 | 9 | 44.51 |
| 4 | 15 | 43.71 |

(continued)

| Lens Unit | Starting Surface | Focal Length |
|---|---|---|
| 5 | 28 | ∞ |

NUMERICAL EXAMPLE 5

UNIT: mm

SURFACE DATA

| Surface No. | r | d | nd | vd |
|---|---|---|---|---|
| 1 | 148.065 | 10.80 | 1.49700 | 81.5 |
| 2 | 600.901 | (Variable) | | |
| 3 | 468.543 | 2.48 | 1.49700 | 81.5 |
| 4 | 61.662 | 12.59 | | |
| 5 | -107.650 | 2.20 | 1.72964 | 54.6 |
| 6 | 194.384 | 10.10 | | |
| 7 | 189.512 | 5.07 | 1.76785 | 30.0 |
| 8 | -467.589 | (Variable) | | |
| 9 | 662.352 | 5.10 | 1.78125 | 49.0 |
| 10 | -151.191 | 3.77 | | |
| 11 | -103.757 | 2.20 | 1.81946 | 29.2 |
| 12 | 199.808 | 2.71 | 1.75772 | 51.4 |
| 13 | ∞ | -2.71 | | |
| 14 | 199.808 | 2.71 | | |
| 15 | ∞ | 3.00 | 1.51633 | 64.1 |
| 16 | ∞ | (Variable) | | |
| 17 (SP) | ∞ | 14.57 | | |
| 18 | 34.101 | 8.36 | 1.71379 | 29.3 |
| 19 | -67.924 | 1.65 | 1.84593 | 43.4 |
| 20 | 38.768 | 7.12 | | |
| 21 | 182.416 | 1.65 | 1.95715 | 32.0 |
| 22 | 31.407 | 17.14 | 1.43875 | 94.9 |
| 23 | -115.314 | 0.10 | | |
| 24 | 49.852 | 8.52 | 1.43875 | 94.9 |
| 25 | -57.684 | 0.70 | | |
| 26 | -145.292 | 5.35 | 1.43875 | 94.9 |
| 27 | -39.718 | 3.68 | | |
| 28* | -272.421 | 3.30 | 1.95150 | 29.8 |
| 29* | 295.219 | (Variable) | | |
| 30 | ∞ | 3.00 | 1.51633 | 64.1 |
| 31 | ∞ | (Variable) | | |
| Image Plane | ∞ | | | |

ASPHERIC DATA

28th Surface
K = 0.00000e+00 A 4=-3.37812e-05 A 6= 6.67955e-09 A 8= 1.89280e-11

29th Surface
K = 0.00000e+00 A 4=-3.13542e-05 A 6= 1.28966e-08 A 8= 3.35922e-11 A10=-6.33814e-14 A12= 4.80398e-17

VARIOUS DATA

|  | ZOOM RATIO |  | 1.90 |  |
|---|---|---|---|---|
|  |  | WIDE | MIDDLE | TELE |
|  | Focal Length | 35.70 | 49.38 | 68.00 |
|  | Fno | 1.40 | 1.40 | 1.40 |
|  | Half Angle of View [°] | 28.55 | 23.66 | 17.65 |
|  | Image Height | 19.42 | 21.63 | 21.64 |
|  | Overall Lens Length | 227.59 | 227.59 | 227.59 |
|  | BF | 0.40 | 0.40 | 0.40 |
|  | d2 | 10.43 | 38.62 | 59.68 |
|  | d8 | 64.53 | 30.01 | 0.50 |
|  | d16 | 1.04 | 7.37 | 15.82 |
|  | d29 | 10.60 | 10.60 | 10.60 |
|  | d31 | 0.40 | 0.40 | 0.40 |

ZOOM LENS UNIT DATA

| Lens Unit | Starting Surface | Focal Length |
|---|---|---|
| 1 | 1 | 392.22 |
| 2 | 3 | -90.26 |
| 3 | 9 | 64.19 |
| 4 | 17 | 84.84 |
| 5 | 30 | ∞ |

NUMERICAL EXAMPLE 6
UNIT: mm

SURFACE DATA

| Surface No. | r | d | nd | vd |
|---|---|---|---|---|
| 1 | 168.064 | 2.25 | 1.74255 | 53.1 |
| 2 | 63.385 | 17.01 |  |  |
| 3 | -595.089 | 2.00 | 1.72916 | 54.7 |
| 4 | 120.383 | 11.39 |  |  |
| 5 | 117.604 | 6.86 | 1.84472 | 31.2 |
| 6 | 420.629 | (Variable) |  |  |
| 7 | 156.180 | 8.90 | 1.94991 | 32.7 |
| 8 | -71.649 | 1.70 | 1.95985 | 23.5 |
| 9 | -246.247 | 6.77 |  |  |
| 10 (SP) | ∞ | 0.10 |  |  |
| 11 | ∞ | 1.50 | 1.51633 | 64.1 |
| 12 | ∞ | 2.85 | 2.00330 | 28.3 |
| 13 | 876.831 | 3.19 |  |  |

(continued)

| Surface No. | r | d | nd | vd |
|---|---|---|---|---|
| 14 | -181.118 | -3.19 | | |
| 15 | 876.831 | -2.85 | 2.00330 | 28.3 |
| 16 | ∞ | 2.85 | | |
| 17 | 876.831 | 3.19 | | |
| 18 | -181.118 | 1.20 | 1.49700 | 81.5 |
| 19 | ∞ | 3.75 | 1.59522 | 67.7 |
| 20 | -155.002 | (Variable) | | |
| 21 | 371.091 | 3.88 | 1.82121 | 22.1 |
| 22 | -114.613 | 1.50 | 1.88288 | 40.8 |
| 23 | 96.404 | 0.52 | | |
| 24 | 50.068 | 5.75 | 1.48749 | 70.2 |
| 25 | -480.756 | 9.85 | | |
| 26 | -98.466 | 1.00 | 1.91831 | 36.1 |
| 27 | 32.355 | 4.40 | 1.43875 | 94.9 |
| 28 | 164.422 | 0.79 | | |
| 29 | 76.891 | 7.57 | 1.43875 | 94.9 |
| 30 | -30.293 | 1.00 | 1.88284 | 40.8 |
| 31 | -50.837 | 0.10 | | |
| 32 | 76.720 | 5.51 | 1.73172 | 28.4 |
| 33 | -137.824 | 0.10 | | |
| 34 | -263.659 | 3.00 | 1.49700 | 81.5 |
| 35 | -73.106 | (Variable) | | |
| 36 | -159.545 | 4.73 | 1.43881 | 94.9 |
| 37 | -43.694 | 0.90 | | |
| 38 | -71.609 | 4.44 | 1.43875 | 94.9 |
| 39 | -44.866 | 0.72 | | |
| 40 | -40.150 | 0.90 | 1.88828 | 33.5 |
| 41* | -80.858 | (Variable) | | |
| 42 | ∞ | 3.00 | 1.51633 | 64.1 |
| 43 | ∞ | (Variable) | | |
| Image Plane | ∞ | | | |

ASPHERIC DATA

41st Surface

K = 0.00000e+00 A 4= 3.65499e-06

VARIOUS DATA

| ZOOM RATIO | | 1.89 | | |
|---|---|---|---|---|
| | | WIDE | MIDDLE | TELE |
| Focal Length | | 28.50 | 34.99 | 54.00 |
| Fno | | 1.40 | 1.40 | 1.40 |
| Half Angle of View [°] | | 34.84 | 31.33 | 21.83 |
| Image Height | | 19.84 | 21.30 | 21.64 |
| Overall Lens Length | | 272.08 | 228.42 | 170.16 |
| BF | | 0.40 | 0.40 | 0.40 |
| d6 | | 117.15 | 69.84 | 0.50 |

(continued)

| | | | |
|---|---|---|---|
| d20 | 1.42 | 1.60 | 5.67 |
| d35 | 0.70 | 4.18 | 11.19 |
| d41 | 11.20 | 11.20 | 11.20 |
| d43 | 0.40 | 0.40 | 0.40 |

ZOOM LENS UNIT DATA

| Lens Unit | Starting Surface | Focal Length |
|---|---|---|
| 1 | 1 | -114.55 |
| 2 | 7 | 59.12 |
| 3 | 21 | 106.68 |
| 4 | 36 | 34093.90 |
| 5 | 42 | ∞ |

NUMERICAL EXAMPLE 7

UNIT: mm

SURFACE DATA

| Surface No. | r | d | nd | vd |
|---|---|---|---|---|
| 1 | 98.502 | 2.50 | 1.88300 | 40.8 |
| 2 | 38.198 | 22.65 | | |
| 3 | -111.773 | 2.50 | 1.49700 | 81.5 |
| 4* | 46.515 | 1.87 | | |
| 5 | 71.420 | 6.81 | 1.84942 | 25.7 |
| 6 | 375.265 | (Variable) | | |
| 7 | 114.319 | 3.45 | 1.81939 | 45.6 |
| 8 | -556.232 | 24.38 | | |
| 9 | 142.406 | 2.56 | 1.51441 | 53.8 |
| 10 | ∞ | 2.56 | 1.51441 | 53.8 |
| 11 | -142.406 | -2.56 | | |
| 12 | ∞ | 2.56 | | |
| 13 | -142.406 | 1.20 | 1.86966 | 20.0 |
| 14 | 571.251 | (Variable) | | |
| 15 (SP) | ∞ | 1.31 | | |
| 16 | -297.015 | 1.80 | 1.75904 | 51.3 |
| 17 | 69.186 | 4.00 | | |
| 18 | -226.974 | 6.00 | 1.86966 | 20.0 |
| 19 | -24.092 | 1.00 | 1.92075 | 28.9 |
| 20 | -68.689 | 4.57 | | |
| 21 | -33.984 | 1.00 | 1.99716 | 29.4 |
| 22 | 101.672 | 0.44 | | |
| 23 | 60.162 | 5.52 | 1.43875 | 94.9 |
| 24 | -32.334 | 0.10 | | |
| 25* | 37.858 | 8.52 | 1.49700 | 81.5 |
| 26* | -45.070 | (Variable) | | |

(continued)

| Surface No. | r | d | nd | vd |
|---|---|---|---|---|
| 27 | 55.676 | 7.41 | 1.43875 | 94.9 |
| 28 | -40.600 | 0.90 | | |
| 29 | -91.333 | 2.00 | 1.72916 | 54.7 |
| 30* | -263.383 | (Variable) | | |
| 31 | ∞ | 2.00 | 1.51633 | 64.1 |
| 32 | ∞ | (Variable) | | |
| Image Plane | ∞ | | | |

ASPHERIC DATA

4th Surface
K = 0.00000e+00 A 4=-2.87835e-06 A 6=-4.95339e-11 A 8=-7.62383e-13 A10= 7.94564e-16 A12=-3.64687e-19

25th Surface
K = 0.00000e+00 A 4=-5.87027e-06 A 6= 1.00665e-08 A 8=-2.44702e-11 A10= 1.20858e-14

26th Surface
K = 0.00000e+00 A 4= 6.80783e-06 A 6= 3.21604e-09

30th Surface
K = 0.00000e+00 A 4= 5.54573e-06 A 6= 8.12503e-09 A 8= 1.93185e-11

VARIOUS DATA

| ZOOM RATIO | | 2.11 | |
|---|---|---|---|
| | WIDE | MIDDLE | TELE |
| Focal Length | 14.00 | 21.50 | 29.50 |
| Fno | 1.20 | 1.20 | 1.20 |
| Half Angle of View [°] | 45.41 | 33.45 | 25.70 |
| Image Height | 14.20 | 14.20 | 14.20 |
| Overall Lens Length | 195.37 | 165.53 | 154.57 |
| BF | 0.40 | 0.40 | 0.40 |
| d6 | 57.71 | 19.80 | 0.53 |
| d14 | 1.34 | 9.25 | 17.40 |
| d26 | 0.70 | 1.59 | 2.47 |
| d30 | 13.04 | 12.32 | 11.59 |
| d32 | 0.40 | 0.40 | 0.40 |

ZOOM LENS UNIT DATA

| Lens Unit | Starting Surface | Focal Length |
|---|---|---|
| 1 | 1 | -48.52 |
| 2 | 7 | 40.74 |
| 3 | 15 | 101.41 |
| 4 | 27 | 75.21 |

(continued)

| Lens Unit | Starting Surface | Focal Length |
|---|---|---|
| 5 | 31 | ∞ |

NUMERICAL EXAMPLE 8

UNIT: mm

SURFACE DATA

| Surface No. | r | d | nd | vd |
|---|---|---|---|---|
| 1 | 109.300 | 2.38 | 1.88300 | 40.8 |
| 2 | 43.625 | 16.38 | | |
| 3 | 753.174 | 2.50 | 1.59522 | 67.7 |
| 4 | 120.673 | 6.76 | | |
| 5 | -260.400 | 1.90 | 1.43875 | 94.7 |
| 6 | 102.631 | 7.67 | 1.92286 | 20.9 |
| 7 | 372.961 | 0.10 | 1.53172 | 48.8 |
| 8* | 217.855 | (Variable) | | |
| 9* | 87.617 | 13.07 | 1.59270 | 35.3 |
| 10 | -43.753 | 1.80 | 1.95375 | 32.3 |
| 11 | -69.143 | 8.83 | | |
| 12 | -113.086 | 1.90 | 1.86966 | 20.0 |
| 13 | 184.499 | 8.16 | 1.83481 | 42.7 |
| 14 | ∞ | -8.16 | | |
| 15 | 184.499 | 8.16 | | |
| 16 | ∞ | 1.20 | 1.51633 | 64.1 |
| 17 | ∞ | (Variable) | | |
| 18 (SP) | ∞ | 6.55 | | |
| 19 | 46.847 | 5.49 | 1.92286 | 20.9 |
| 20 | -39.949 | 0.95 | 1.85025 | 30.1 |
| 21 | 37.776 | 2.81 | | |
| 22* | -66.069 | 0.95 | 2.00100 | 29.1 |
| 23 | 41.340 | 6.24 | 1.43875 | 94.7 |
| 24 | -45.887 | 0.62 | | |
| 25 | 59.331 | 11.13 | 1.43875 | 94.7 |
| 26 | -31.010 | (Variable) | | |
| 27 | -130.580 | 7.06 | 1.43875 | 94.7 |
| 28 | -30.949 | 1.29 | | |
| 29* | 299.776 | 2.38 | 1.95150 | 29.8 |
| 30* | 118.562 | (Variable) | | |
| 31 | ∞ | 1.80 | 1.51633 | 64.1 |
| 32 | ∞ | (Variable) | | |
| Image Plane | ∞ | | | |

ASPHERIC DATA

8th Surface
K = 0.00000e+00 A 4=-1.00738e-06 A 6= 1.94315e-10 A 8=-8.92776e-14 A10= 8.76201e-18 9th Surface

K = 0.00000e+00 A 4=-9.45836e-07 A 6= 3.59897e-10

22nd Surface
K = 0.00000e+00 A 4=-6.30082e-06 A 6=-5.37086e-09 A 8= 2.51835e-11 A10=-1.26875e-13

29th Surface
K = 0.00000e+00 A 4=-3.72607e-05 A 6=-4.65488e-08 A 8= 8.30739e-11

30th Surface
K = 0.00000e+00 A 4=-3.29966e-05 A 6=-4.56380e-08 A 8= 1.72438e-10 A10=-1.92890e-13 A12= 1.05183e-16

VARIOUS DATA

| ZOOM RATIO | | 1.93 | |
|---|---|---|---|
| | WIDE | MIDDLE | TELE |
| Focal Length | 20.50 | 32.00 | 39.50 |
| Fno | 1.40 | 1.40 | 1.40 |
| Half Angle of View [°] | 46.10 | 33.65 | 28.34 |
| Image Height | 21.30 | 21.30 | 21.30 |
| Overall Lens Length | 205.25 | 181.08 | 176.45 |
| BF | 0.40 | 0.40 | 0.40 |
| d8 | 51.06 | 14.77 | 2.57 |
| d17 | 1.00 | 13.12 | 20.68 |
| d26 | 0.70 | 3.06 | 4.78 |
| d30 | 15.87 | 13.52 | 11.79 |
| d32 | 0.40 | 0.40 | 0.40 |

ZOOM LENS UNIT DATA

| Lens Unit | Starting Surface | Focal Length |
|---|---|---|
| 1 | 1 | -56.48 |
| 2 | 9 | 47.56 |
| 3 | 18 | 134.26 |
| 4 | 27 | 158.05 |
| 5 | 31 | ∞ |

NUMERICAL EXAMPLE 9

UNIT: mm

SURFACE DATA

| Surface No. | r | d | nd | vd |
|---|---|---|---|---|
| 1 | 185.415 | 2.48 | 1.49700 | 81.5 |
| 2 | 76.223 | 11.88 | | |
| 3 | -117.407 | 2.20 | 1.72916 | 54.7 |
| 4 | 248.528 | 7.45 | | |

(continued)

| Surface No. | r | d | nd | vd |
|---|---|---|---|---|
| 5 | 198.975 | 4.77 | 1.79870 | 29.7 |
| 6 | -1291.653 | (Variable) | | |
| 7 | 475.311 | 5.67 | 1.79097 | 48.1 |
| 8 | -189.829 | 4.64 | | |
| 9 | -111.921 | 2.20 | 1.86209 | 27.7 |
| 10 | 198.001 | 3.39 | 1.67278 | 31.9 |
| 11 | ∞ | -3.39 | | |
| 12 | 198.001 | 3.39 | | |
| 13 | ∞ | 3.00 | 1.51633 | 64.1 |
| 14 | ∞ | (Variable) | | |
| 15 (SP) | ∞ | 18.16 | | |
| 16 | 30.770 | 8.89 | 1.65142 | 33.6 |
| 17 | -73.437 | 1.65 | 1.74831 | 52.1 |
| 18 | 38.589 | 2.96 | | |
| 19 | 122.223 | 1.65 | 1.96994 | 30.9 |
| 20 | 26.566 | 18.62 | 1.43875 | 94.9 |
| 21 | -501.664 | 2.08 | | |
| 22 | 53.604 | 8.70 | 1.43875 | 94.9 |
| 23 | -53.575 | 0.70 | | |
| 24 | -209.852 | 6.10 | 1.43875 | 94.9 |
| 25 | -38.068 | 3.09 | | |
| 26* | -478.193 | 3.30 | 1.95150 | 29.8 |
| 27* | 163.967 | (Variable) | | |
| 28 | ∞ | 3.00 | 1.51633 | 64.1 |
| 29 | ∞ | (Variable) | | |
| Image Plane | ∞ | | | |

ASPHERIC DATA

26th Surface
K = 0.00000e+00 A4=-3.65701e-05 A 6= 1.05258e-08 A 8= 1.99619e-11

27th Surface
K = 0.00000e+00 A 4=-3.37165e-05 A 6= 2.03152e-08 A 8= 2.49601e-11 A10=-5.45362e-14 A12= 4.45900e-17

VARIOUS DATA

| ZOOM RATIO | | 1.90 | |
|---|---|---|---|
| | WIDE | MIDDLE | TELE |
| Focal Length | 35.70 | 50.00 | 68.00 |
| Fno | 1.40 | 1.40 | 1.40 |
| Half Angle of View [°] | 28.55 | 23.40 | 17.65 |
| Image Height | 19.42 | 21.63 | 21.64 |
| Overall Lens Length | 229.05 | 193.32 | 177.02 |
| BF | 0.40 | 0.40 | 0.40 |
| d6 | 80.12 | 32.18 | 0.50 |
| d14 | 4.17 | 16.38 | 31.75 |

(continued)

| ZOOM RATIO | | 1.90 | |
| --- | --- | --- | --- |
| | WIDE | MIDDLE | TELE |
| d27 | 11.01 | 11.01 | 11.01 |
| d29 | 0.40 | 0.40 | 0.40 |

ZOOM LENS UNIT DATA

| Lens Unit | Starting Surface | Focal Length |
| --- | --- | --- |
| 1 | 1 | -124.85 |
| 2 | 7 | 71.49 |
| 3 | 15 | 88.04 |
| 4 | 28 | ∞ |

NUMERICAL EXAMPLE 10

UNIT: mm

SURFACE DATA

| Surface No. | r | d | nd | vd |
| --- | --- | --- | --- | --- |
| 1 | 106.283 | 2.48 | 1.49700 | 81.5 |
| 2 | 52.944 | 11.46 | | |
| 3 | -123.905 | 2.20 | 1.88216 | 40.8 |
| 4 | 169.626 | 5.80 | | |
| 5 | 147.623 | 5.02 | 1.94981 | 29.4 |
| 6 | -720.003 | (Variable) | | |
| 7 | 243.884 | 4.59 | 1.94021 | 33.7 |
| 8 | -269.028 | 7.30 | | |
| 9 | -100.663 | 2.20 | 1.75108 | 29.6 |
| 10 | 159.866 | 3.16 | 1.54133 | 47.4 |
| 11 | ∞ | -3.16 | | |
| 12 | 159.866 | 3.16 | | |
| 13 | ∞ | 3.00 | 1.51633 | 64.1 |
| 14 | ∞ | (Variable) | | |
| 15 (SP) | ∞ | 12.71 | | |
| 16 | 31.387 | 8.96 | 1.61234 | 37.1 |
| 17 | -60.684 | 1.65 | 1.76467 | 50.7 |
| 18 | 35.909 | 4.62 | | |
| 19 | 121.939 | 1.65 | 1.90464 | 37.8 |
| 20 | 27.711 | 11.71 | 1.43875 | 94.9 |
| 21 | -413.721 | 0.10 | | |
| 22 | 50.526 | 8.74 | 1.44746 | 92.9 |
| 23 | -47.229 | 0.70 | | |
| 24 | -1390.325 | 7.48 | 1.43875 | 94.9 |
| 25 | -33.284 | 0.23 | | |
| 26* | 336.957 | 3.30 | 1.95150 | 29.8 |
| 27* | 85.370 | (Variable) | | |
| 28 | ∞ | 3.00 | 1.51633 | 64.1 |
| 29 | | | ∞ | (Variable) |
| Image Plane | | | ∞ | |

ASPHERIC DATA

26th Surface
K = 0.00000e+00 A4=-4.48721e-05 A 6= 7.83232e-09 A 8= 3.34031e-11

27th Surface
K = 0.00000e+00 A 4=-4.35798e-05 A 6= 2.45916e-08 A 8= 3.54921e-11 A10=-6.55859e-14 A12= 4.70594e-17

VARIOUS DATA

| ZOOM RATIO | | 1.41 | |
|---|---|---|---|
| | WIDE | MIDDLE | TELE |
| Focal Length | 35.00 | 42.00 | 49.50 |
| Fno | 1.22 | 1.22 | 1.22 |
| Half Angle of View [°] | 30.08 | 27.25 | 23.61 |
| Image Height | 20.27 | 21.63 | 21.64 |
| Overall Lens Length | 169.81 | 152.71 | 141.35 |
| BF | 0.40 | 0.40 | 0.40 |
| d6 | 39.46 | 17.29 | 0.50 |
| d14 | 1.00 | 6.06 | 11.49 |
| d27 | 10.59 | 10.59 | 10.59 |
| d29 | 0.40 | 0.40 | 0.40 |

ZOOM LENS UNIT DATA

| Lens Unit | Starting Surface | Focal Length |
|---|---|---|
| 1 | 1 | -116.94 |
| 2 | 7 | 58.02 |
| 3 | 15 | 73.84 |
| 4 | 28 | ∞ |

NUMERICAL EXAMPLE 11

UNIT: mm

SURFACE DATA

| Surface No. | r | d | nd | vd |
|---|---|---|---|---|
| 1 | 84.878 | 3.50 | 1.72916 | 54.7 |
| 2 | 48.738 | 15.05 | | |
| 3* | 264.074 | 4.00 | 1.51899 | 78.0 |
| 4 | 48.655 | 30.38 | | |
| 5 | -73.816 | 2.47 | 1.80809 | 22.8 |
| 6 | -61.123 | 4.10 | | |
| 7 | -60.837 | 1.50 | 1.72922 | 54.7 |

(continued)

| Surface No. | r | d | nd | vd |
|---|---|---|---|---|
| 8 | -860.139 | 3.12 | | |
| 9 | -139.443 | 0.90 | 2.00330 | 28.3 |
| 10 | -225.301 | 4.37 | 1.72389 | 55.1 |
| 11 | -84.336 | (Variable) | | |
| 12* | 154.255 | 7.91 | 1.93438 | 34.3 |
| 13 | -163.365 | 1.50 | 1.83458 | 21.5 |
| 14 | 134.710 | 10.73 | 1.77647 | 49.5 |
| 15 | -109.996 | (Variable) | | |
| 16 | -95.662 | 7.14 | 1.74577 | 52.7 |
| 17 | -52.418 | 0.90 | 1.70160 | 30.4 |
| 18 | -301.118 | 0.10 | | |
| 19 | 305.709 | 2.89 | 1.51633 | 64.1 |
| 20 | ∞ | 2.13 | | |
| 21 | -509.189 | -2.13 | | |
| 22 | ∞ | 2.13 | | |
| 23 | -509.189 | 1.80 | 1.91942 | 36.0 |
| 24 | 553.217 | 6.39 | 1.86966 | 20.0 |
| 25 | -153.153 | (Variable) | | |
| 26 (SP) | ∞ | 2.40 | | |
| 27 | -101.928 | 1.50 | 1.83448 | 29.4 |
| 28 | 35.723 | 12.26 | 1.89055 | 22.8 |
| 29 | -71.423 | 1.96 | | |
| 30 | -57.562 | 1.30 | 1.90118 | 38.2 |
| 31 | 276.629 | (Variable) | | |
| 32 | 52.718 | 1.40 | 1.90639 | 37.5 |
| 33 | 33.181 | 16.56 | 1.50204 | 81.8 |
| 34 | -86.818 | 0.10 | | |
| 35 | 74.378 | 9.08 | 1.49903 | 82.3 |
| 36 | -173.952 | 0.26 | | |
| 37 | 47.949 | 14.73 | 1.43875 | 94.7 |
| 38 | -64.093 | 0.10 | | |
| 39 | -185.314 | 5.35 | 1.43875 | 94.7 |
| 40 | -60.052 | 1.80 | 2.00330 | 28.3 |
| 41 | 33.305 | 0.10 | | |
| 42 | 32.283 | 7.71 | 1.70730 | 56.5 |
| 43* | 330.952 | (Variable) | | |
| Image Plane | ∞ | | | |

ASPHERIC DATA

3rd Surface
K = 0.00000e+00 A 4= 1.05449e-06 A 6= 2.81263e-11

12th Surface
K = 0.00000e+00 A 4=-2.97880e-07 A 6= 6.17907e-12

43rd Surface
K = 0.00000e+00 A 4= 6.73095e-06 A 6= 4.22312e-09

VARIOUS DATA

| ZOOM RATIO | | | 2.00 | |
|---|---|---|---|---|
| | WIDE | MIDDLE 1 | MIDDLE 2 | TELE |
| Focal Length | 20.00 | 25.50 | 32.57 | 40.00 |
| Fno | 1.34 | 1.36 | 1.38 | 1.40 |
| Half Angle of View [°] | 47.25 | 40.31 | 33.60 | 28.41 |
| Image Height | 21.64 | 21.64 | 21.64 | 21.64 |
| Overall Lens Length | 269.21 | 269.21 | 269.21 | 269.21 |
| BF | 20.28 | 20.28 | 20.28 | 20.28 |
| d11 | 41.23 | 26.87 | 14.55 | 5.83 |
| d15 | 1.01 | 7.73 | 7.97 | 1.76 |
| d25 | 0.10 | 11.64 | 29.55 | 49.50 |
| d31 | 14.85 | 10.94 | 5.12 | 0.10 |
| d43 | 20.28 | 20.28 | 20.28 | 20.28 |

ZOOM LENS UNIT DATA

| Lens Unit | Starting Surface | Focal Length |
|---|---|---|
| 1 | 1 | -41.53 |
| 2 | 12 | 78.04 |
| 3 | 16 | 188.57 |
| 4 | 26 | -76.03 |
| 5 | 32 | 47.82 |

NUMERICAL EXAMPLE 12

UNIT: mm

SURFACE DATA

| Surface No. | r | d | nd | vd |
|---|---|---|---|---|
| 1 | 55.562 | 2.50 | 1.72877 | 54.7 |
| 2 | 33.518 | 12.43 | | |
| 3* | 102.019 | 2.50 | 1.49700 | 81.5 |
| 4* | 40.391 | 11.63 | | |
| 5 | -177.869 | 2.00 | 1.57670 | 70.0 |
| 6 | 58.752 | 15.39 | 1.69770 | 30.2 |
| 7 | -728.089 | 17.60 | | |
| 8 | -53.324 | 2.00 | 1.57786 | 69.8 |
| 9 | 416.717 | 4.19 | 1.89406 | 39.2 |
| 10 | -241.432 | (Variable) | | |
| 11 | ∞ | 3.75 | 1.45394 | 91.4 |
| 12 | -264.140 | -3.75 | | |
| 13 | ∞ | 3.75 | | |
| 14 | -264.140 | 0.10 | | |

(continued)

| Surface No. | r | d | nd | vd |
|---|---|---|---|---|
| 15* | 87.201 | 6.51 | 1.88351 | 40.7 |
| 16 | 244.144 | 0.52 | | |
| 17 | 312.991 | 2.00 | 1.90197 | 21.1 |
| 18 | 78.265 | 10.58 | 1.61296 | 65.7 |
| 19 | -187.827 | (Variable) | | |
| 20 (SP) | ∞ | 17.55 | | |
| 21 | -70.654 | 0.90 | 1.88300 | 40.8 |
| 22 | 119.146 | 1.23 | | |
| 23 | -4893.502 | 0.90 | 1.88300 | 40.8 |
| 24 | 63.713 | 3.39 | 1.86966 | 20.0 |
| 25 | -550.920 | (Variable) | | |
| 26 | 115.188 | 9.81 | 1.43875 | 94.9 |
| 27 | -75.289 | 0.10 | | |
| 28 | 74.502 | 12.79 | 1.43875 | 94.9 |
| 29 | -88.297 | 0.10 | | |
| 30 | 71.959 | 14.26 | 1.43875 | 94.9 |
| 31 | -63.393 | 2.00 | 1.93001 | 34.8 |
| 32 | 148.911 | 0.10 | | |
| 33 | 46.778 | 13.42 | 1.43875 | 94.9 |
| 34 | -195.930 | 2.21 | | |
| 35* | 102.726 | 7.32 | 1.70255 | 56.9 |
| 36* | 1583.881 | (Variable) | | |
| Image Plane | ∞ | | | |

ASPHERIC DATA

3rd Surface
K = 0.00000e+00 A 4= 3.48654e-06 A 6=-3.01850e-09 A 8= 1.55267e-12 A10=-6.73634e-17

4th Surface
K = 0.00000e+00 A 4= 1.24068e-06 A 6=-4.06820e-09

15th Surface
K = 0.00000e+00 A 4=-1.53474e-07 A 6=-2.04153e-11

35th Surface
K = 0.00000e+00 A 4=-7.54691e-06 A6=-4.81392e-09

36th Surface
K = 0.00000e+00 A4=-7.31080e-06 A6=-2.12153e-09

VARIOUS DATA

| ZOOM RATIO | | 1.74 | |
|---|---|---|---|
| | WIDE | MIDDLE | TELE |
| Focal Length | 24.00 | 32.00 | 41.80 |
| Fno | 1.41 | 1.41 | 1.41 |
| Half Angle of View [°] | 42.03 | 34.06 | 27.37 |

(continued)

| ZOOM RATIO | | | 1.74 | |
|---|---|---|---|---|
| | | WIDE | MIDDLE | TELE |
| Image Height | | 21.64 | 21.64 | 21.64 |
| Overall Lens Length | | 237.50 | 237.50 | 237.50 |
| BF | | 15.00 | 15.00 | 15.00 |
| d10 | | 18.23 | 7.72 | 0.80 |
| d19 | | 0.80 | 16.53 | 33.61 |
| d25 | | 16.19 | 10.96 | 0.80 |
| d36 | | 15.00 | 15.00 | 15.00 |

ZOOM LENS UNIT DATA

| Lens Unit | Starting Surface | Focal Length |
|---|---|---|
| 1 | 1 | -36.93 |
| 2 | 11 | 48.18 |
| 3 | 20 | -53.60 |
| 4 | 26 | 40.70 |

NUMERICAL EXAMPLE 13

UNIT: mm

SURFACE DATA

| Surface No. | r | d | nd | vd |
|---|---|---|---|---|
| 1 | 150.771 | 4.73 | 1.79044 | 25.9 |
| 2 | 171.746 | (Variable) | | |
| 3 | 201.485 | 2.23 | 1.55353 | 73.0 |
| 4 | 63.525 | 32.67 | | |
| 5* | -101.841 | 1.98 | 1.59039 | 68.3 |
| 6 | 158.146 | 0.10 | | |
| 7 | 123.939 | 5.46 | 1.75872 | 27.2 |
| 8 | 507.262 | (Variable) | | |
| 9 | 472.499 | 1.98 | 1.94854 | 23.0 |
| 10 | 192.178 | 3.95 | 1.60406 | 55.9 |
| 11 | ∞ | -3.95 | | |
| 12 | 192.178 | 3.95 | | |
| 13 | ∞ | 2.70 | 1.84666 | 23.8 |
| 14 | 676.684 | (Variable) | | |
| 15 (SP) | ∞ | 4.86 | | |
| 16 | 28.481 | 8.28 | 1.59844 | 38.6 |
| 17 | -97.117 | 1.49 | 1.79780 | 47.4 |
| 18 | 39.866 | 6.85 | | |
| 19 | 63.761 | 0.90 | 1.88300 | 40.8 |
| 20 | 22.021 | 6.14 | 1.43875 | 94.9 |
| 21 | 412.942 | 6.97 | | |
| 22 | 89.335 | 7.13 | 1.53634 | 48.4 |

(continued)

| Surface No. | r | d | nd | vd |
|---|---|---|---|---|
| 23 | -52.699 | 1.92 | | |
| 24 | -402.983 | 8.52 | 1.43875 | 94.9 |
| 25 | -29.864 | 0.10 | | |
| 26* | 74.719 | 2.97 | 1.95150 | 29.8 |
| 27* | 39.525 | (Variable) | | |
| 28 | ∞ | 2.70 | 1.51633 | 64.1 |
| 29 | ∞ | (Variable) | | |
| Image Plane | ∞ | | | |

ASPHERIC DATA

5th Surface
K = 0.00000e+00 A 4= 9.68786e-08 A 6=-3.83814e-11 A 8= 2.62582e-14 A10=-5.42579e-18

26th Surface
K = 0.00000e+00 A 4=-6.23466e-05 A 6= 2.57040e-08 A 8= 2.74399e-11

27th Surface
K = 0.00000e+00 A 4=-6.49110e-05 A 6= 6.04427e-08 A 8=-1.75742e-11

VARIOUS DATA

ZOOM RATIO 2.71

| | WIDE | MIDDLE 1 | MIDDLE 2 | TELE |
|---|---|---|---|---|
| Focal Length | 24.70 | 45.28 | 67.00 | 57.05 |
| Fno | 1.42 | 1.42 | 1.42 | 1.42 |
| Half Angle of View [°] | 36.85 | 25.54 | 17.90 | 20.77 |
| Image Height | 18.51 | 21.63 | 21.64 | 21.64 |
| Overall Lens Length | 226.54 | 226.54 | 226.54 | 226.54 |
| BF | 0.40 | 0.40 | 0.40 | 0.40 |
| d2 | 1.28 | 40.55 | 41.61 | 43.55 |
| d8 | 88.35 | 26.63 | 1.03 | 10.45 |
| d14 | 1.59 | 24.04 | 48.58 | 37.22 |
| d27 | 12.41 | 12.41 | 12.41 | 12.41 |
| d29 | 0.40 | 0.40 | 0.40 | 0.40 |

ZOOM LENS UNIT DATA

| Lens Unit | Starting Surface | Focal Length |
|---|---|---|
| 1 | 1 | 1420.47 |
| 2 | 3 | -84.81 |
| 3 | 9 | 63.71 |
| 4 | 15 | 76.84 |
| 5 | 28 | ∞ |

NUMERICAL EXAMPLE 14

UNIT: mm

SURFACE DATA

| Surface No. | r | d | nd | vd |
|---|---|---|---|---|
| 1 | 175.734 | 18.05 | 1.51742 | 52.4 |
| 2 | -218.204 | 3.00 | 1.93665 | 22.5 |
| 3 | -400.892 | (Variable) | | |
| 4* | -861.610 | 2.48 | 1.57255 | 70.5 |
| 5 | 68.941 | 12.82 | | |
| 6 | -90.058 | 2.20 | 1.59521 | 67.7 |
| 7 | 196.878 | 3.36 | 1.90077 | 21.1 |
| 8 | 930.565 | 0.10 | | |
| 9 | 130.845 | 4.55 | 1.54145 | 48.2 |
| 10 | 370.473 | (Variable) | | |
| 11 | 550.543 | 2.20 | 1.99266 | 25.0 |
| 12 | 221.551 | 4.21 | 1.57492 | 70.6 |
| 13 | ∞ | -4.21 | | |
| 14 | 221.551 | 4.21 | | |
| 15 | ∞ | 3.00 | 1.59522 | 67.7 |
| 16 | 1112.066 | (Variable) | | |
| 17 (SP) | ∞ | 13.53 | | |
| 18 | 32.379 | 9.00 | 1.61460 | 36.9 |
| 19 | -130.324 | 1.65 | 1.72916 | 54.7 |
| 20 | 54.189 | 5.97 | | |
| 21 | 96.940 | 1.00 | 1.94500 | 33.2 |
| 22 | 24.721 | 5.43 | 1.43876 | 94.9 |
| 23 | 270.914 | 14.63 | | |
| 24 | 69.150 | 7.60 | 1.49975 | 60.2 |
| 25 | -68.560 | 0.70 | | |
| 26 | -240.443 | 6.02 | 1.52042 | 51.7 |
| 27 | -41.016 | 1.95 | | |
| 28* | 143.334 | 3.30 | 1.95150 | 29.8 |
| 29* | 60.642 | (Variable) | | |
| 30 | ∞ | 3.00 | 1.51633 | 64.1 |
| 31 | ∞ | (Variable) | | |
| Image Plane | ∞ | | | |

ASPHERIC DATA

4th Surface
K = 0.00000e+00 A 4=-3.79059e-08 A6=-2.18257e-11 A8= 5.24129e-15

28th Surface
K = 0.00000e+00 A 4=-3.73914e-05 A 6= 1.95830e-08 A 8= 7.11096e-12

29th Surface
K = 0.00000e+00 A4=-3.64531e-05 A 6= 3.14709e-08 A 8=-6.70468e-12

VARIOUS DATA

| ZOOM RATIO | | | 2.72 | |
|---|---|---|---|---|
| | WIDE | MIDDLE 1 | MIDDLE 2 | TELE |
| Focal Length | 35.70 | 50.00 | 97.00 | 70.46 |
| Fno | 1.42 | 1.42 | 1.42 | 1.42 |
| Half Angle of View [°] | 28.55 | 23.40 | 12.57 | 17.07 |
| Image Height | 19.42 | 21.63 | 21.64 | 21.64 |
| Overall Lens Length | 239.94 | 239.94 | 239.94 | 239.94 |
| BF | 0.40 | 0.40 | 0.40 | 0.40 |
| d3 | 0.70 | 23.86 | 43.74 | 39.95 |
| d10 | 86.81 | 54.67 | 1.24 | 25.48 |
| d16 | 1.46 | 10.45 | 44.00 | 23.54 |
| d29 | 12.42 | 12.42 | 12.42 | 12.42 |
| d31 | 0.40 | 0.40 | 0.40 | 0.40 |

ZOOM LENS UNIT DATA

| Lens Unit | Starting Surface | Focal Length |
|---|---|---|
| 1 | 1 | 299.32 |
| 2 | 4 | -79.11 |
| 3 | 11 | 73.44 |
| 4 | 17 | 89.11 |
| 5 | 30 | ∞ |

NUMERICAL EXAMPLE 15

UNIT: mm

SURFACE DATA

| Surface No. | r | d | nd | vd |
|---|---|---|---|---|
| 1 | 104.697 | 22.08 | 1.49931 | 61.7 |
| 2 | -331.488 | 3.00 | 1.86966 | 20.0 |
| 3 | -1180.926 | (Variable) | | |
| 4* | 300.444 | 2.48 | 1.50654 | 80.0 |
| 5 | 44.979 | 15.19 | | |
| 6 | -68.740 | 2.20 | 1.63722 | 63.0 |
| 7 | 222.013 | 3.55 | 1.86964 | 20.0 |
| 8 | -1256.527 | 0.10 | | |
| 9 | 92.678 | 3.67 | 1.56206 | 57.9 |
| 10 | 151.515 | (Variable) | | |
| 11 | 219.114 | 2.20 | 2.00071 | 25.7 |
| 12 | 159.842 | 4.30 | 1.47045 | 73.0 |
| 13 | ∞ | -4.30 | | |
| 14 | 159.842 | 4.30 | | |

(continued)

| Surface No. | r | d | nd | vd |
|---|---|---|---|---|
| 15 | ∞ | 3.00 | 1.88277 | 40.8 |
| 16 | 683.601 | (Variable) | | |
| 17 (SP) | ∞ | 12.22 | | |
| 18 | 37.361 | 9.00 | 1.66244 | 32.7 |
| 19 | -63.832 | 1.65 | 1.88300 | 40.8 |
| 20 | 47.612 | 6.50 | | |
| 21 | 77.156 | 1.00 | 2.00183 | 28.4 |
| 22 | 33.878 | 12.23 | 1.43875 | 94.9 |
| 23 | 437.419 | 0.90 | | |
| 24 | 86.248 | 7.27 | 1.63653 | 63.1 |
| 25 | -64.284 | 0.70 | | |
| 26 | -257.189 | 6.10 | 1.50405 | 81.4 |
| 27 | -37.980 | 0.10 | | |
| 28* | 207.305 | 3.30 | 1.95150 | 29.8 |
| 29* | 91.103 | (Variable) | | |
| 30 | ∞ | 3.00 | 1.51633 | 64.1 |
| 31 | ∞ | (Variable) | | |
| Image Plane | ∞ | | | |

ASPHERIC DATA

4th Surface
K = 0.00000e+00 A 4= 8.97542e-08 A 6=-1.44928e-10 A 8= 9.46460e-14 A10=-2.94001e-17

28th Surface
K = 0.00000e+00 A 4=-3.78907e-05 A 6= 1.15529e-08 A 8= 1.03307e-11

29th Surface
K = 0.00000e+00 A4=-3.75283e-05 A 6= 2.71695e-08 A 8=-6.10519e-12

VARIOUS DATA

| ZOOM RATIO | | 1.90 | | |
|---|---|---|---|---|
| | WIDE | MIDDLE 1 | MIDDLE 2 | TELE |
| Focal Length | 35.70 | 49.70 | 67.99 | 60.16 |
| Fno | 1.10 | 1.10 | 1.10 | 1.10 |
| Half Angle of View [°] | 28.55 | 23.52 | 17.65 | 19.78 |
| Image Height | 19.42 | 21.63 | 21.64 | 21.64 |
| Overall Lens Length | 193.27 | 193.27 | 193.27 | 193.27 |
| BF | 0.39 | 0.39 | 0.39 | 0.39 |
| d3 | 0.70 | 18.42 | 31.54 | 26.89 |
| d10 | 45.54 | 21.96 | 1.56 | 9.33 |
| d16 | 1.55 | 7.40 | 14.68 | 11.56 |
| d29 | 10.79 | 10.79 | 10.79 | 10.79 |
| d31 | 0.39 | 0.39 | 0.39 | 0.39 |

ZOOM LENS UNIT DATA

| Lens Unit | Starting Surface | Focal Length |
|---|---|---|
| 1 | 1 | 226.73 |
| 2 | 4 | -65.25 |
| 3 | 11 | 54.72 |
| 4 | 17 | 64.22 |
| 5 | 30 | ∞ |

NUMERICAL EXAMPLE 16

UNIT: mm

SURFACE DATA

| Surface No. | r | d | nd | vd |
|---|---|---|---|---|
| 1 | 77.198 | 2.50 | 1.88300 | 40.8 |
| 2 | 35.841 | 8.17 | | |
| 3* | 74.129 | 2.00 | 1.58164 | 69.4 |
| 4 | 34.322 | 17.04 | | |
| 5 | -72.734 | 2.00 | 1.43875 | 94.9 |
| 6 | 55.580 | 1.87 | | |
| 7 | 54.932 | 8.88 | 1.60342 | 38.0 |
| 8 | -343.771 | (Variable) | | |
| 9 | 90.635 | 5.91 | 1.96293 | 29.9 |
| 10 | -50.892 | 1.20 | 1.85262 | 22.3 |
| 11 | -6400.947 | 10.20 | | |
| 12 (SP) | ∞ | 2.39 | | |
| 13 | 33.447 | 5.36 | 1.43875 | 94.9 |
| 14 | 191.204 | 0.10 | | |
| 15 | 60.520 | 7.00 | 1.43875 | 94.9 |
| 16 | -39.753 | 1.20 | 1.93287 | 34.5 |
| 17 | 81.476 | 5.85 | | |
| 18 | -69.450 | 7.10 | 1.86966 | 20.0 |
| 19 | -36.388 | 2.42 | | |
| 20 | 34.688 | 7.24 | 1.43875 | 94.9 |
| 21 | -45.661 | 0.90 | 1.97382 | 30.6 |
| 22 | 1502.650 | 0.17 | | |
| 23 | ∞ | 1.00 | 1.51633 | 64.1 |
| 24 | ∞ | 1.42 | | |
| 25* | -209.082 | -1.42 | | |
| 26 | ∞ | 1.42 | | |
| 27* | -209.082 | 1.50 | 1.84666 | 23.8 |
| 28 | -135.080 | 0.10 | | |
| 29 | -340.846 | 3.55 | 1.52307 | 78.2 |
| 30 | -68.170 | (Variable) | | |
| 31 | -243.204 | 4.77 | 1.72937 | 54.7 |
| 32 | -43.779 | 0.10 | | |
| 33 | -137.030 | 1.20 | 2.00362 | 28.2 |

(continued)

| Surface No. | r | d | nd | vd |
|---|---|---|---|---|
| 34 | 120.403 | 2.91 | | |
| 35* | 130.672 | 2.00 | 1.86997 | 42.7 |
| 36* | 165.390 | (Variable) | | |
| 37 | ∞ | 2.30 | 1.51633 | 64.1 |
| 38 | ∞ | (Variable) | | |
| Image Plane | ∞ | | | |

ASPHERIC DATA

3rd Surface
K = 0.00000e+00 A 4= 1.79104e-06 A 6=-1.52439e-10 A 8= 4.83040e-13

25th Surface
K = 0.00000e+00 A 4= 2.78921e-06 A6=-6.78247e-10 A 8= 1.41782e-12

27th Surface
K = 0.00000e+00 A 4= 2.78921e-06 A6=-6.78247e-10 A 8= 1.41782e-12

35th Surface
K = 0.00000e+00 A4=-1.05608e-05 A 6=-2.27656e-07 A 8= 4.42322e-10

36th Surface
K = 0.00000e+00 A 4= 4.86933e-06 A 6=-2.48532e-07 A 8= 6.93077e-10 A10=-4.71647e-13

VARIOUS DATA

| ZOOM RATIO | | 1.48 | |
|---|---|---|---|
| | WIDE | MIDDLE | TELE |
| Focal Length | 16.50 | 20.00 | 24.50 |
| Fno | 1.38 | 1.39 | 1.41 |
| Half Angle of View [°] | 49.72 | 47.25 | 41.45 |
| Image Height | 19.47 | 21.64 | 21.64 |
| Overall Lens Length | 174.61 | 157.88 | 144.85 |
| BF | 0.10 | 0.10 | 0.10 |
| d8 | 38.73 | 18.51 | 1.00 |
| d30 | 1.00 | 4.48 | 8.96 |
| d36 | 11.60 | 11.60 | 11.60 |
| d38 | 0.10 | 0.10 | 0.10 |

ZOOM LENS UNIT DATA

| Lens Unit | Starting Surface | Focal Length |
|---|---|---|
| 1 | 1 | -43.33 |
| 2 | 9 | 43.56 |
| 3 | 31 | -1999.90 |

(continued)

| Lens Unit | Starting Surface | Focal Length |
|---|---|---|
| 4 | 37 | ∞ |

Table 1 below summarizes various values in each numerical example.

TABLE 1

| | EX1 | EX2 | EX3 | EX4 | EX5 | EX6 | EX7 | EX8 |
|---|---|---|---|---|---|---|---|---|
| fgr/fw | 2.539 | 1.982 | 2.380 | 2.891 | 1.798 | 2.074 | 2.910 | 2.320 |
| (RI × R2)/{(R1+R2)× fgr} | 2.604 | 3.127 | 2.244 | 3.044 | 3.113 | 3.064 | 3.495 | 3.880 |
| $vd_{mf}$ | 20.487 | 25.949 | 30.225 | 26.955 | 53.525 | 31.967 | 41.687 | 28.096 |
| $vd_{mm}$ | - | 39.68 | - | 45.249 | 51.420 | - | 53.800 | 42.74 |
| $vd_{mr}$ | 70.055 | 76.686 | 78.730 | 69.827 | 78.533 | 72.202 | 72.855 | 76.215 |
| $nd_m$ | 1.487 | 1.654 | - | 1.796 | 1.758 | - | 1.514 | 1.835 |
| dp/fw | 3.033 | 2.069 | 1.917 | 3.099 | 2.336 | 2.365 | 3.060 | 2.247 |
| abs(θm) | 0.000 | 0.000 | 0.000 | 0.000 | 0.000 | 0.000 | 0.000 | 0.000 |
| θin | 10.627 | 12.554 | 20.344 | 9.177 | 8.771 | 11.651 | 14.123 | 12.576 |
| | | | | | | | | |
| | EX9 | EX10 | EX11 | EX12 | EX13 | EX14 | EX15 | EX16 |
| fgr/fw | 2.002 | 1.658 | 9.428 | 2.008 | 2.579 | 2.057 | 1.533 | 2.640 |
| (R1 × R2)/{(R1+R2)× fgr} | 2.770 | 2.755 | 2.700 | 5.482 | 3.016 | 3.017 | 2.921 | 4.800 |
| $vd_{mf}$ | 38.893 | 31.521 | 46.418 | 34.691 | 26.523 | 40.590 | 46.524 | 62.125 |
| $vd_{mm}$ | 31.948 | 47.436 | 20.019 | 65.919 | 55.884 | 70.572 | 73.023 | - |
| $vd_{mr}$ | 79.598 | 79.965 | 72.129 | 79.948 | 69.226 | 60.939 | 68.05 | 52.231 |
| $nd_m$ | 1.673 | 1.541 | - | 1.454 | 1.604 | 1.575 | 1.470 | - |
| dp/fw | 1.853 | 1.450 | 2.596 | 1.841 | 3.027 | 2.317 | 2.232 | 2.075 |
| abs(θm) | 0.000 | 0.000 | 0.000 | 0.000 | 0.000 | 0.000 | 0.000 | 1.000 |
| θin | 8.553 | 11.447 | 12.332 | 15.390 | 11.330 | 9.693 | 12.130 | 13.854 |

IMAGE PICKUP APPARATUS

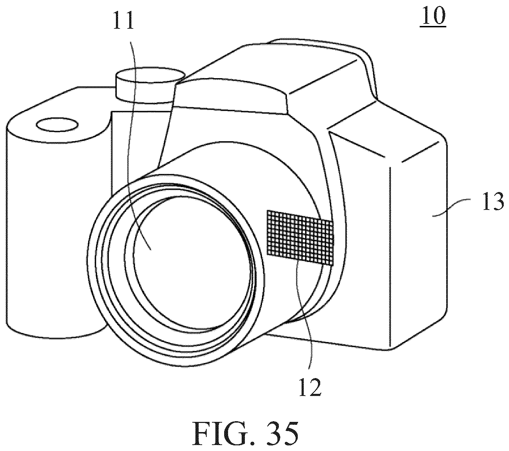

Referring now to Fig. 35, a description will be given of an example of a digital still camera (image pickup apparatus) using an imaging optical system according to each example as an imaging optical system. In Fig. 35, reference numeral 10 denotes a camera body, and reference numeral 11 denotes an imaging optical system that includes any one of the imaging optical systems according to Examples 1 to 16. Reference numeral 12 denotes a solid-state image sensor (photoelectric conversion element) such as a CCD sensor or CMOS sensor that is built into the camera body and receives and photoelectrically converts an optical image formed by the imaging optical system 11. The camera body 10 may be a so-called single-lens reflex camera having a quick-turn mirror, or a so-called mirrorless camera having no quick-turn mirror.

Thus, applying the imaging optical system according to each example to an image pickup apparatus such as a digital still camera can provide an image pickup apparatus with a small lens.

The imaging optical system according to each example can be used for a camera in a smartphone, a distance detecting camera, an interchangeable lens of a lens interchangeable type camera, a lens fixed type camera, a film with a lens (disposable camera), binoculars, etc. The disclosure may be used in a camera viewfinder or an XR device for, for example, line-of-sight detection, biometric recognition, facial expression recognition, etc. The disclosure may be used for external environment recognition applications such as XR devices and automatic robots.

Various embodiments have been described in detail above but it will be understood that the present disclosure is not limited to these embodiments and encompasses all modifications, variants, alternatives and equivalents falling within the scope of the appended claims.

**Claims**

1.  An imaging optical system comprising:

    a plurality of lens units,
    **characterized in that** each distance between adjacent lens units among the plurality of lens units changes during zooming,
    wherein the plurality of lens units include:

    a first lens unit (L1) with negative refractive power and a second lens unit (L2) with positive refractive power disposed closer to an image plane than the first lens unit, and
    a first transmissive reflective surface (HM1) and a second transmissive reflective surface (HM2) disposed closer to the image plane than the first transmissive reflective surface.

2.  The imaging optical system according to claim 1, **characterized in that** the second lens unit includes the first transmissive reflective surface and the second transmissive reflective surface.

3.  The imaging optical system according to claim 1 or 2, **characterized in that** the first transmissive reflective surface and the second transmissive reflective surface move during zooming.

4.  The imaging optical system according to any one of claims 1 to 3, **characterized in that** the second lens unit moves during zooming, and
    wherein the plurality of lens units include a third lens unit disposed closer to the image plane than the second lens unit, and a moving amount of the third lens unit during zooming is smaller than that of the second lens unit.

5.  The imaging optical system according to any one of claims 1 to 4, **characterized in that** the following inequality is satisfied:

    $$1.0 \le fgr/fw \le 4.5$$

    where fgr is a focal length of a lens unit including one of the first transmissive reflective surface and the second transmissive reflective surface, which has a smaller radius of curvature, and fw is a focal length of the imaging optical system at a wide-angle end.

6.  The imaging optical system according to any one of claims 1 to 5, **characterized in that** the following inequality is satisfied:

    $$2.0 \le (R1 \times R2)/\{(R1+R2) \times fgr\} \le 7.0$$

    where fgr is a focal length of a lens unit including one of the first transmissive reflective surface and the second transmissive reflective surface, which has a smaller radius of curvature, R1 is a radius of curvature of the first transmissive reflective surface, and R2 is a radius of curvature of the second transmissive reflective surface.

7.  The imaging optical system according to any one of claims 1 to 6, **characterized in that** the following inequality is satisfied:

    $$20 \le vd_{mf} \le 65$$

    where $vd_{mf}$ is an average value of Abbe numbers of one or more positive lenses disposed closer to an object than the first transmissive reflective surface.

8.  The imaging optical system according to any one of claims 1 to 7, further comprising an aperture stop (SP) disposed closer to the image plane than the second transmissive reflective surface, and
    **characterized in that** the following inequality is satisfied:

    $$20 \le vd_{mm} \le 96$$

where $vd_{mm}$ is an average value of Abbe numbers of one or more positive lenses disposed between the first transmissive reflective surface and the aperture stop.

9. The imaging optical system according to any one of claims 1 to 8, further comprising an aperture stop (SP) disposed closer to an object than the first transmissive reflective surface,
**characterized in that** the following inequality is satisfied:

$$50 \le vd_{mr} \le 96$$

where $vd_{mr}$ is an average value of Abbe numbers of one or more positive lenses disposed between the aperture stop and the second transmissive reflective surface.

10. The imaging optical system according to any one of claims 1 to 9, **characterized in that** the following inequality is satisfied:

$$1.40 \le n_{dm} \le 1.85$$

where $n_{dm}$ is a refractive index for d-line of a first lens disposed between the first transmissive reflective surface and the second transmissive reflective surface.

11. The imaging optical system according to any one of claims 1 to 10, further comprising an aperture stop (SP),
**characterized in that** at least one of a lens disposed closer to the image plane than the aperture stop, the first transmissive reflective surface, and the second transmissive reflective surface moves during focusing.

12. The imaging optical system according to claim 11, **characterized in that** the first transmissive reflective surface and the second transmissive reflective surface move during focusing.

13. The imaging optical system according to any one of claims 1 to 12, **characterized in that** the following inequality is satisfied:

$$1.5 \le dp/fw \le 4.0$$

where dp is a distance on an optical axis between an object-side surface of a lens disposed closest to an object at a wide-angle end and an entrance pupil, and fw is a focal length of the imaging optical system at the wide-angle end.

14. The imaging optical system according to any one of claims 1 to 13, **characterized in that** the following inequality is satisfied:

$$0.0 \le |\theta m| \le 8.0$$

where $\theta m$ [°] is a smaller of an open angle of the first transmissive reflective surface and an open angle of the second transmissive reflective surface.

15. The imaging optical system according to any one of claims 1 to 14, **characterized in that** the following inequality is satisfied:

$$2.0 \le |\theta l| \le 50.0$$

where $\theta l$ [°] is a larger of an open angle of the first transmissive reflective surface and an open angle of the second transmissive reflective surface.

16. The imaging optical system according to any one of claims 1 to 15, further comprising a waveplate disposed between the first transmissive reflective surface and the second transmissive reflective surface,
**characterized in that** light from an object side transmits through the first transmissive reflective surface and the waveplate in this order, is reflected by the second transmissive reflective surface toward the object side, transmits through the waveplate, is reflected by the first transmissive reflective surface toward an image side, and transmits through the waveplate and the second transmissive reflective surface in this order toward the image side.

17. The imaging optical system according to claim 16, **characterized in that** the following inequality is satisfied:

$$0.0 \leq \theta in \leq 40.0$$

where $\theta in$ [°] is an incident angle of a principal ray of a most off-axis light beam when the most off-axis light beam first enters one of the first transmissive reflective surface and the second transmissive reflective surface, which has a smaller open angle.

18. The imaging optical system according to any one of claims 1 to 17, **characterized in that** the plurality of lens units further include a lens unit with positive refractive power disposed closer to an object than the first lens unit.

19. An image pickup apparatus comprising:

the imaging optical system according to any one of claims 1 to 18; and
an image sensor (IM) configured to receive an image formed by the imaging optical system.

A      B      C      D      E      IM

PBS            HM

QWP1        QWP2   POL

## FIG. 1

E      D      C      B      A      A'     IM

POL   QWP2   HM    QWP1   PBS    POL

## FIG. 2

FIG. 3

WIDE

d ——
g ------
C —·—·—
F — — —

M — — · S ——

Fno= 1.2    ω= 43.9°    ω= 43.9°    ω= 43.9°

-0.100    0.100  -0.100    0.100  -10.000    10.000  -0.020    0.020

SPHERICAL      ASTIGMATISM      DISTORTION      CHROMATIC
ABERRATION                        (%)          ABERRATION

## FIG. 4A

TELE

d ——
g ------
C —·—·—
F — — —

M — — · S ——

Fno= 1.2    ω= 30.6°    ω= 30.6°    ω= 30.6°

-0.100    0.100  -0.100    0.100  -10.000    10.000  -0.020    0.020

SPHERICAL      ASTIGMATISM      DISTORTION      CHROMATIC
ABERRATION                        (%)          ABERRATION

## FIG. 4B

FIG. 5

# WIDE

d ⎯⎯
g ⎯‧⎯
C ⎯⎯
F ⎯ ⎯

M ⎯ ⎯ ‧ S ⎯⎯

Fno= 1.2     ω= 39.8°     ω= 39.8°     ω= 39.8°

-0.400    0.400   -0.400    0.400   -5.000    5.000   -0.050    0.050

SPHERICAL ABERRATION | ASTIGMATISM | DISTORTION (%) | CHROMATIC ABERRATION

## FIG. 6A

# TELE

d ⎯⎯
g ⎯‧⎯
C ⎯‧‧⎯
F ⎯ ⎯

M ⎯ ⎯ ‧ S ⎯⎯

Fno= 1.2     ω= 24.5°     ω= 24.5°     ω= 24.5°

-0.400    0.400   -0.400    0.400   -5.000    5.000   -0.050    0.050

SPHERICAL ABERRATION | ASTIGMATISM | DISTORTION (%) | CHROMATIC ABERRATION

## FIG. 6B

FIG. 7

WIDE

d ————
g ――――
C ――――
F ― ― ―

M― ― ―・ S―――

Fno= 1.4        ω= 37.5°        ω= 37.5°        ω= 37.5°

-0.100   0.100  -0.100   0.100  -10.000  10.000  -0.050   0.050
SPHERICAL       ASTIGMATISM     DISTORTION      CHROMATIC
ABERRATION                      (%)             ABERRATION

## FIG. 8A

d ————
g ――――
C ――――
F ― ― ―

TELE

M― ― ―・ S―――

Fno= 1.4        ω= 25.2°        ω= 25.2°        ω= 25.2°

-0.100   0.100  -0.100   0.100  -10.000  10.000  -0.050   0.050
SPHERICAL       ASTIGMATISM     DISTORTION      CHROMATIC
ABERRATION                      (%)             ABERRATION

## FIG. 8B

FIG. 9

WIDE

d
g
C
F

M — — — S ———

Fno= 1.42          ω= 43.1°          ω= 43.1°          ω= 43.1°

-0.100      0.100   -0.100      0.100   -20.000    20.000   -0.050      0.050
SPHERICAL          ASTIGMATISM      DISTORTION        CHROMATIC
ABERRATION                            (%)            ABERRATION

FIG. 10A

d
g
C
F

TELE

M — — — S ———

Fno= 1.42          ω= 16.2°          ω= 16.2°          ω= 16.2°

-0.100      0.100   -0.100      0.100   -20.000    20.000   -0.050      0.050
SPHERICAL          ASTIGMATISM      DISTORTION        CHROMATIC
ABERRATION                            (%)            ABERRATION

FIG. 10B

FIG. 11

WIDE

d ——
g ----
C ---
F -- --

M ---- S ——

Fno= 1.4          ω = 31°          ω = 31°          ω = 31°

-0.100    0.100   -0.100    0.100   -10.000   10.000   -0.050    0.050
SPHERICAL         ASTIGMATISM       DISTORTION        CHROMATIC
ABERRATION                          (%)               ABERRATION

## FIG. 12A

d ——
g ----
C ---
F -- --

TELE

M ---- S ——

Fno= 1.4          ω = 16.9°        ω = 16.9°        ω = 16.9°

-0.100    0.100   -0.100    0.100   -10.000   10.000   -0.050    0.050
SPHERICAL         ASTIGMATISM       DISTORTION        CHROMATIC
ABERRATION                          (%)               ABERRATION

## FIG. 12B

FIG. 13

WIDE

d ——
g ------
C —-—
F ----

M ---- S ——

Fno= 1.4          ω= 36.9°          ω= 36.9°          ω= 36.9°

-0.100      0.100   -0.100      0.100   -10.000    10.000   -0.050      0.050
SPHERICAL          ASTIGMATISM         DISTORTION          CHROMATIC
ABERRATION                                (%)            ABERRATION

## FIG. 14A

d ——
g ------
C —-—
F ----

TELE

M ---- S ——

Fno= 1.4          ω= 21.5°          ω= 21.5°          ω= 21.5°

-0.100      0.100   -0.100      0.100   -10.000    10.000   -0.050      0.050
SPHERICAL          ASTIGMATISM         DISTORTION          CHROMATIC
ABERRATION                                (%)            ABERRATION

## FIG. 14B

FIG. 15

WIDE

d ⎯⎯
g ⎯ ⎯ ⎯
C ⎯ · ⎯
F ⎯ ⎯

M ⎯ ⎯ · S ⎯⎯

Fno= 1.2     ω= 49.7°     ω= 49.7°     ω= 49.7°

-0.100   0.100    -0.100   0.100    -10.000   10.000    -0.050   0.050

SPHERICAL    ASTIGMATISM    DISTORTION    CHROMATIC
ABERRATION                 (%)    ABERRATION

## FIG. 16A

TELE

d ⎯⎯
g ⎯ ⎯ ⎯
C ⎯ · ⎯
F ⎯ ⎯

M ⎯ ⎯ · S ⎯⎯

Fno= 1.2     ω= 25°     ω= 25°     ω= 25°

-0.100   0.100    -0.100   0.100    -10.000   10.000    -0.050   0.050

SPHERICAL    ASTIGMATISM    DISTORTION    CHROMATIC
ABERRATION                 (%)    ABERRATION

## FIG. 16B

FIG. 17

WIDE

FIG. 18A

TELE

FIG. 18B

FIG. 19

WIDE

d
g
C
F

M ― ― ― ∙ S ―――

Fno= 1.4        ω= 31.1°        ω= 31.1°        ω= 31.1°

-0.100        0.100   -0.100        0.100   -10.000        10.000   -0.050        0.050
SPHERICAL        ASTIGMATISM        DISTORTION        CHROMATIC
ABERRATION                      (%)        ABERRATION

FIG. 20A

d
g
C
F

TELE

M ― ― ― ∙ S ―――

Fno= 1.4        ω= 16.8°        ω= 16.8°        ω= 16.8°

-0.100        0.100   -0.100        0.100   -10.000        10.000   -0.050        0.050
SPHERICAL        ASTIGMATISM        DISTORTION        CHROMATIC
ABERRATION                      (%)        ABERRATION

FIG. 20B

FIG. 21

WIDE

d ———
g ———
C ———
F ———

M ———· S ———

Fno= 1.22    ω= 31.8°    ω= 31.8°    ω= 31.8°

| -0.100  0.100 | -0.100  0.100 | -10.000  10.000 | -0.050  0.050 |
| SPHERICAL ABERRATION | ASTIGMATISM | DISTORTION (%) | CHROMATIC ABERRATION |

## FIG. 22A

d ———
g ———
C ———
F ———

TELE

M ———· S ———

Fno= 1.22    ω= 22.9°    ω= 22.9°    ω= 22.9°

| -0.100  0.100 | -0.100  0.100 | -10.000  10.000 | -0.050  0.050 |
| SPHERICAL ABERRATION | ASTIGMATISM | DISTORTION (%) | CHROMATIC ABERRATION |

## FIG. 22B

FIG. 23

WIDE

Fno= 1.34 | ω = 49.5° | ω = 49.5° | ω = 49.5°

d ———
g ―――
C ―――
F ― ―

M― ― ―

-0.100    0.100
SPHERICAL
ABERRATION

-0.100    0.100
ASTIGMATISM

-10.000    10.000
DISTORTION
(%)

-0.050    0.050
CHROMATIC
ABERRATION

FIG. 24A

TELE

Fno= 1.38 | ω = 32.7° | ω = 32.7° | ω = 32.7°

d ———
g ―――
C ―――
F ― ―

M― ― ― S———

-0.100    0.100
SPHERICAL
ABERRATION

-0.100    0.100
ASTIGMATISM

-10.000    10.000
DISTORTION
(%)

-0.050    0.050
CHROMATIC
ABERRATION

FIG. 24B

FIG. 25

WIDE

d ——
g -----
C -·-·-
F --·--

M --·- S ——

Fno= 1.41     $\omega$ = 43.2°     $\omega$ = 43.2°     $\omega$ = 43.2°

| -0.100        0.100 | -0.100        0.100 | -10.000      10.000 | -0.050        0.050 |
| SPHERICAL<br>ABERRATION | ASTIGMATISM | DISTORTION<br>(%) | CHROMATIC<br>ABERRATION |

FIG. 26A

TELE

d ——
g -----
C -·-·-
F ----

M --·- S ——

Fno= 1.41     $\omega$ = 26.7°     $\omega$ = 26.7°     $\omega$ = 26.7°

| -0.100        0.100 | -0.100        0.100 | -10.000      10.000 | -0.050        0.050 |
| SPHERICAL<br>ABERRATION | ASTIGMATISM | DISTORTION<br>(%) | CHROMATIC<br>ABERRATION |

FIG. 26B

FIG. 27

WIDE

d ———
g —·—·—
C —··—··—
F — — —

M — — — S ———

Fno= 1.42          ω= 43.3°          ω= 43.3°          ω= 43.3°

-0.100     0.100    -0.100     0.100    -10.000    10.000    -0.050     0.050
SPHERICAL          ASTIGMATISM        DISTORTION         CHROMATIC
ABERRATION                              (%)              ABERRATION

# FIG. 28A

TELE

d ———
g —·—·—
C —··—··—
F — — —

M — — — S ———

Fno= 1.42          ω= 16.2°          ω= 16.2°          ω= 16.2°

-0.100     0.100    -0.100     0.100    -10.000    10.000    -0.050     0.050
SPHERICAL          ASTIGMATISM        DISTORTION         CHROMATIC
ABERRATION                              (%)              ABERRATION

# FIG. 28B

FIG. 29

FIG. 30A

FIG. 30B

71

FIG. 31

WIDE

d ⎯⎯
g ⎯ ⎯
C ⎯ ⎯
F ⎯ ⎯

M ⎯ ⎯ S ⎯⎯

Fno= 1.1          ω= 31.1°          ω= 31.1°          ω= 31.1°

-0.100      0.100   -0.100      0.100   -10.000    10.000   -0.050      0.050
SPHERICAL         ASTIGMATISM       DISTORTION        CHROMATIC
ABERRATION                            (%)           ABERRATION

# FIG. 32A

TELE

d ⎯⎯
g ⎯ ⎯
C ⎯ ⎯
F ⎯ ⎯

M ⎯ ⎯ S ⎯⎯

Fno= 1.1          ω= 16.6°          ω= 16.6°          ω= 16.6°

-0.100      0.100   -0.100      0.100   -10.000    10.000   -0.050      0.050
SPHERICAL         ASTIGMATISM       DISTORTION        CHROMATIC
ABERRATION                            (%)           ABERRATION

# FIG. 32B

FIG. 33

FIG. 34A

FIG. 34B

FIG. 35

Europäisches
Patentamt
European
Patent Office
Office européen
des brevets

# EUROPEAN SEARCH REPORT

**Application Number**

EP 25 19 3710

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | JP 2025 068233 A (CANON KK) 28 April 2025 (2025-04-28) * the whole document * ----- | 1,4,5,7, 9,14-17, 19 | INV. G02B17/00 G02B15/14 |
| A | JP 2005 352273 A (KONICA MINOLTA OPTO INC) 22 December 2005 (2005-12-22) * the whole document * ----- | 1-19 | |
| A | JP 2014 074743 A (NIKON CORP) 24 April 2014 (2014-04-24) * the whole document * ----- | 1-19 | |

**TECHNICAL FIELDS SEARCHED (IPC)**

G02B

The present search report has been drawn up for all claims

| Place of search | Date of completion of the search | Examiner |
|---|---|---|
| Munich | 17 December 2025 | Politsch, Erich |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 19 3710

This annex lists the patent family members relating to the patent documents cited in the above-mentioned European search report.
The members are as contained in the European Patent Office EDP file on
The European Patent Office is in no way liable for these particulars which are merely given for the purpose of information.

17-12-2025

| Patent document cited in search report | | Publication date | Patent family member(s) | | Publication date |
|---|---|---|---|---|---|
| JP 2025068233 | A | 28-04-2025 | JP | 2025068233 A | 28-04-2025 |
| | | | WO | 2025083989 A1 | 24-04-2025 |
| JP 2005352273 | A | 22-12-2005 | NONE | | |
| JP 2014074743 | A | 24-04-2014 | NONE | | |

EPO FORM P0459

For more details about this annex : see Official Journal of the European Patent Office, No. 12/82